(19) **Europäisches Patentamt / European Patent Office / Office européen des brevets**

(11) **EP 4 489 493 A1**

(12) **EUROPEAN PATENT APPLICATION**
published in accordance with Art. 153(4) EPC

(43) Date of publication:
**08.01.2025 Bulletin 2025/02**

(21) Application number: **22929599.3**

(22) Date of filing: **21.11.2022**

(51) International Patent Classification (IPC):
*H04W 72/04* $^{(2023.01)}$

(52) Cooperative Patent Classification (CPC):
**H04W 72/04**

(86) International application number:
**PCT/CN2022/133310**

(87) International publication number:
**WO 2023/165171 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.03.2022  CN 202210210964**
**15.04.2022  CN 202210400170**

(71) Applicant: **Datang Mobile Communications Equipment Co., Ltd.**
**Beijing 100085 (CN)**

(72) Inventors:
• **ZHAO, Yue**
**Beijing 100085 (CN)**
• **GAO, Xuejuan**
**Beijing 100085 (CN)**

(74) Representative: **Cabinet Nony**
**11 rue Saint-Georges**
**75009 Paris (FR)**

(54) **DATA TRANSMISSION METHOD, TERMINAL, GNB AND STORAGE MEDIUM**

(57) The present disclosure discloses a data transmission method, a terminal, a base station and a storage medium, used for solving the technical problem that it is difficult for a terminal to determine frequency domain resources corresponding to uplink and downlink transmission for data transmission in the prior art. The method comprises: determining frequency domain resources used for uplink and downlink transmission at the same moment in a frequency spectrum resource; and performing data transmission according to the frequency domain resources.

EP 4 489 493 A1

```
┌─────────────────────────────────────────────────────────┐
│  determine frequency domain resources for uplink and     │──── 101
│  downlink transmission at the same moment in the same    │
│  frequency spectrum resource                             │
└─────────────────────────────────────────────────────────┘
                            │
                            ▼
┌─────────────────────────────────────────────────────────┐
│  perform data transmission according to the frequency    │──── 102
│  domain resources                                        │
└─────────────────────────────────────────────────────────┘
```

FIG. 1

**Description**

CROSS-REFERENCE TO RELATED APPLICATIONS

The present disclosure claims the priority of the Chinese patent application No.202210210964.3, filed to the China Patent Office on March 04, 2022, and entitled "Data Transmission Method, Terminal, base station and Storage Medium", of which the entire contents are incorporated herein by reference; and the present disclosure claims the priority of the Chinese patent application No.202210400170.3, filed to the China Patent Office on April 15, 2022, and entitled "Data Transmission Method, Terminal, base station and Storage Medium", of which the entire contents are incorporated herein by reference.

TECHNICAL FIELD

The present disclosure relates to the field of communications, in particular to a data transmission method, a terminal, a base station and a storage medium.

BACKGROUND

In a new-generation wireless communication system, in order to improve coverage and capacity in an uplink direction and reduce a time delay in the uplink direction, a duplex enhancement characteristic is added in the new-generation wireless communication system, and non-overlapping sub-band full duplex in a TDD mode in duplex enhancement can be better adopted to the requirement. The non-overlapping sub-band full duplex is to divide frequency domain resources into a plurality of frequency domain ranges (one frequency domain range may be one sub-band), which do not overlap each other, and uplink frequency domain resources and downlink frequency domain resources are located in different sub-bands respectively.

SUMMARY

The present disclosure provides a data transmission method, a terminal, a base station and a storage medium.
In a first aspect, a data transmission method provided by an embodiment of the present disclosure is applied to a terminal, and the technical solutions of the method are as follows: determining frequency domain resources used for uplink and downlink transmission at the same time unit in the same frequency spectrum resource; and performing data transmission according to the frequency domain resources.
In a possible implementation, the frequency spectrum resource includes a TDD band, an FDD band for uplink, an FDD band for downlink, a carrier, a BWP, or a band for deploying full duplex.
In a possible implementation, determining the frequency domain resources used for uplink and downlink transmission at the same time unit in the same frequency spectrum resource includes: acquiring the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.
In a possible implementation, determining the frequency domain resources used for uplink and downlink transmission at the same time unit in the same frequency spectrum resource includes: receiving radio resource control (RRC) signaling, the RRC signaling being used for configuring the frequency domain resources used for uplink and downlink transmission at the same time unit in the frequency spectrum resource; and determining the frequency domain resources used for uplink and downlink transmission at the same time unit according to the RRC signaling.
In a possible implementation, the RRC signaling is used for configuring frequency domain resources corresponding to a cell level or a terminal group level or a terminal level.
In a possible implementation, the frequency domain resources include: the plurality of frequency domain resources used for uplink transmission and/or downlink transmission.
In a possible implementation, determining the frequency domain resources used for uplink and downlink transmission at the same time unit in the same frequency spectrum resource includes: receiving downlink control information (DCI), the DCI being used for notifying the terminal to use one or more frequency domain resources used for uplink transmission and/or downlink transmission in the plurality of frequency domain resources used for uplink transmission and/or downlink transmission; and determining the one or more frequency domain resources used for uplink transmission and/or downlink transmission according to the DCI.
In a possible implementation, determining the one or more frequency domain resources used for uplink transmission and/or downlink transmission according to the DCI includes: determining the one or more frequency domain resources used for uplink transmission and/or downlink transmission through frequency domain resource allocation information of the DCI.

In a possible implementation, an association relationship exists between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

In a second aspect, an embodiment of the present disclosure provides a data transmission method, applied to a base station, and including: determining frequency domain resources used for uplink and downlink transmission at the same time unit in the same frequency spectrum resource; and performing data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, determining the frequency domain resources used for uplink and downlink transmission at the same time unit in the same frequency spectrum resource includes: acquiring the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, after determining the frequency domain resources used for uplink and downlink transmission at the same time unit in the same frequency spectrum resource, the method further includes: sending the frequency domain resources to a terminal through radio resource control (RRC) signaling.

In a possible implementation, sending the frequency domain resources to the terminal through the radio resource control (RRC) signaling includes: the RRC signaling being a cell level or a terminal group level or a terminal level; and sending the frequency domain resources of the cell level or the terminal group level or the terminal level to the terminal through the RRC signaling.

In a possible implementation, the frequency domain resources include: the plurality of frequency domain resources used for uplink transmission and/or downlink transmission.

In a possible implementation, after determining the frequency domain resources used for uplink and downlink transmission at the same time unit in the same frequency spectrum resource, the method further includes: determining, from the plurality of frequency domain resources used for uplink transmission and/or downlink transmission, one or more frequency domain resources used for uplink transmission and/or downlink transmission used by the terminal; and sending the one or more frequency domain resources used for uplink transmission and/or downlink transmission to the terminal through downlink control information (DCI).

In a possible implementation, sending the one or more frequency domain resources used for uplink transmission and/or downlink transmission to the terminal through the downlink control information (DCI) includes: sending information of the one or more frequency domain resources used for uplink transmission and/or downlink transmission to the terminal through frequency domain resource allocation information of the DCI.

In a possible implementation, an association relationship exists between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

In a third aspect, an embodiment of the present disclosure provides a terminal, including a memory, a transceiver and a processor; the memory being configured to store a computer program; the transceiver being configured to receive and send data under control of the processor; and the processor being configured to read the computer program in the memory and execute the following operations: determining frequency domain resources used for uplink and downlink transmission at the same time unit in the same frequency spectrum resource; and performing data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the processor is further configured to: acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the processor is further configured to: receive radio resource control (RRC) signaling, the RRC signaling being used for configuring the frequency domain resources used for uplink and downlink transmission at the same time unit in the frequency spectrum resource; and determine the frequency domain resources used for uplink and downlink transmission at the same time unit according to the RRC signaling.

In a possible implementation, the RRC signaling is used for configuring frequency domain resources corresponding to a cell level or a terminal group level or a terminal level.

In a possible implementation, the frequency domain resources include: the plurality of frequency domain resources used for uplink transmission and/or downlink transmission.

In a possible implementation, the processor is further configured to: receive downlink control information (DCI), the DCI being used for notifying the terminal to use one or more frequency domain resources used for uplink transmission and/or downlink transmission in the plurality of frequency domain resources used for uplink transmission and/or downlink transmission; and determine the one or more frequency domain resources used for uplink transmission and/or downlink transmission according to the DCI.

In a possible implementation, the processor is further configured to: determine the one or more frequency domain resources used for uplink transmission and/or downlink transmission through frequency domain resource allocation information of the DCI.

In a possible implementation, an association relationship exists between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

In a fourth aspect, an embodiment of the present disclosure further provides a base station, including a memory, a transceiver and a processor; the memory being configured to store a computer program; the transceiver being configured to receive and send data under control of the processor; and the processor being configured to read the computer program in the memory and execute the following operations: determining frequency domain resources used for uplink and downlink transmission at the same time unit in the same frequency spectrum resource; and performing data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the processor is further configured to: acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the processor is further configured to: send, after determining the frequency domain resources used for uplink and downlink transmission at the same time unit in the same frequency spectrum resource, the frequency domain resources to a terminal through radio resource control (RRC) signaling.

In a possible implementation, the processor is further configured to: the RRC signaling being a cell level or a terminal group level or a terminal level; and send the frequency domain resources of the cell level or the terminal group level or the terminal level to the terminal through the RRC signaling.

In a possible implementation, the frequency domain resources include: the plurality of frequency domain resources used for uplink transmission and/or downlink transmission.

In a possible implementation, the processor is further configured to: determine, after determining the frequency domain resources used for uplink and downlink transmission at the same time unit in the same frequency spectrum resource, one or more frequency domain resources used for uplink transmission and/or downlink transmission used by the terminal from the plurality of frequency domain resources used for uplink transmission and/or downlink transmission; and send the one or more frequency domain resources used for uplink transmission and/or downlink transmission to the terminal through downlink control information (DCI).

In a possible implementation, the processor is further configured to: send information of the one or more frequency domain resources used for uplink transmission and/or downlink transmission to the terminal through frequency domain resource allocation information of the DCI.

In a possible implementation, an association relationship exists between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

In a fifth aspect, an embodiment of the present disclosure further provides a terminal, including: a determining unit, configured to determine frequency domain resources used for uplink and downlink transmission at the same time unit in the same frequency spectrum resource; and a transmitting unit, configured to perform data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the determining unit is further configured to: acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the determining unit is further configured to: receive radio resource control (RRC) signaling, the RRC signaling being used for configuring the frequency domain resources used for uplink and downlink transmission at the same time unit in the frequency spectrum resource; and determine the frequency domain resources used for uplink and downlink transmission at the same time unit according to the RRC signaling.

In a possible implementation, the RRC signaling is used for configuring frequency domain resources corresponding to a cell level or a terminal group level or a terminal level.

In a possible implementation, the frequency domain resources include: the plurality of frequency domain resources used for uplink transmission and/or downlink transmission.

In a possible implementation, the determining unit is further configured to: receive downlink control information (DCI), the DCI being used for notifying the terminal to use one or more frequency domain resources used for uplink transmission and/or downlink transmission in the plurality of frequency domain resources used for uplink transmission and/or downlink transmission; and determine the one or more frequency domain resources used for uplink transmission and/or downlink transmission according to the DCI.

In a possible implementation, the determining unit is further configured to: determine the one or more frequency domain resources used for uplink transmission and/or downlink transmission through frequency domain resource allocation information of the DCI.

In a possible implementation, an association relationship exists between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

In a sixth aspect, an embodiment of the present disclosure further provides a base station, including: a determining unit, configured to determine frequency domain resources used for uplink and downlink transmission at the same time unit in the same frequency spectrum resource; and a transmitting unit, configured to perform data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the determining unit is further configured to: acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the determining unit is further configured to: send, after determining the frequency domain resources used for uplink and downlink transmission at the same time unit in the same frequency spectrum resource, the frequency domain resources to a terminal through radio resource control (RRC) signaling.

In a possible implementation, the determining unit is further configured to: the RRC signaling being a cell level or a terminal group level or a terminal level; and send the frequency domain resources of the cell level or the terminal group level or the terminal level to the terminal through the RRC signaling.

In a possible implementation, the frequency domain resources include: the plurality of frequency domain resources used for uplink transmission and/or downlink transmission.

In a possible implementation, the determining unit is further configured to: determine, after determining the frequency domain resources used for uplink and downlink transmission at the same time unit in the same frequency spectrum resource, one or more frequency domain resources used for uplink transmission and/or downlink transmission used by the terminal from the plurality of frequency domain resources used for uplink transmission and/or downlink transmission; and send the one or more frequency domain resources used for uplink transmission and/or downlink transmission to the terminal through downlink control information (DCI).

In a possible implementation, the determining unit is further configured to: send information of the one or more frequency domain resources used for uplink transmission and/or downlink transmission to the terminal through frequency domain resource allocation information of the DCI.

In a possible implementation, an association relationship exists between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

In a seventh aspect, an embodiment of the present disclosure further provides a processor readable storage medium, the processor readable storage medium stores a computer program, and the computer program is used for causing a processor to execute the method as described in the first aspect or the second aspect.

Through the technical solutions in the above one or more embodiments of the embodiments of the present disclosure, the embodiments of the present disclosure at least have the following technical effects.

In the embodiments provided by the present disclosure, by determining the frequency domain resources used for uplink and downlink transmission at the same time unit in the same frequency spectrum resource, the terminal can determine the frequency domain resources used for uplink and downlink transmission at the same time unit, and then perform data transmission.

In addition, in the embodiments provided by the present disclosure, since the base station may dynamically schedule the uplink or downlink frequency domain resources by means of the DCI, compared with a dynamic scheduling manner within a full channel bandwidth or a BWP scope in the prior art, DCI overheads may be saved, and reliability of DCI transmission may be improved.

BRIEF DESCRIPTION OF DRAWINGS

FIG. 1 is a flow diagram of a data transmission method provided by an embodiment of the present disclosure.

FIG. 2 is a schematic diagram of a preset uplink and downlink resource division manner provided by an embodiment of the present disclosure.

FIG. 3 is a schematic diagram of another preset uplink and downlink resource division manner provided by an embodiment of the present disclosure.

FIG. 4 is a schematic diagram of sub-band division provided by an embodiment of the present disclosure.

FIG. 5 is a schematic diagram of another sub-band division provided by an embodiment of the present disclosure.

FIG. 6 is a schematic structural diagram of a terminal provided by an embodiment of the present disclosure.

FIG. 7 is a schematic structural diagram of a base station provided by an embodiment of the present disclosure.

FIG. 8 is a schematic structural diagram of another terminal provided by an embodiment of the present disclosure.

FIG. 9 is a schematic structural diagram of another base station provided by an embodiment of the present disclosure.

DETAILED DESCRIPTION

A term "and/or" in embodiments of the present disclosure describes an association relationship of associated objects, and represents that there may be three kinds of relationships, for example, A and/or B, may represent three cases that: A exists alone, A and B exist at the same time, and B exists alone. A character "/" generally represents that associated objects in front of and behind the character are in an "or" relationship.

A term "a plurality of" in the embodiments of the present disclosure refers to two or more than two, and other quantifiers are similar.

The technical solutions in the embodiments of the present disclosure will be clearly and completely described below with reference to the accompanying drawings in the embodiments of the present disclosure. Apparently, the described embodiments are only some rather than all of the embodiments of the present disclosure. All other embodiments obtained by those ordinarily skilled in the art based on the embodiments in the present disclosure without creative efforts fall within the protection scope of the present disclosure.

The technical solutions provided by the embodiments of the present disclosure may be applicable to various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems each include a terminal device and a network device. The system may further include a core network part, such as an evolved packet system (EPS) and a 5G system (SGS).

The terminal device involved in the embodiments of the present disclosure may refer to a device that provides speech and/or data connectivity to a user, a handheld device with a wireless connection function, or other processing devices connected to a wireless modem. In different systems, names of the terminal device may also be different. For example, in the 5G system, the terminal device may be called user equipment (UE). A wireless terminal device may communicate with one or more core networks (CN) via a radio access network (RAN), and the wireless terminal device may be a mobile terminal device, such as a mobile phone (or called a "cellular" phone) and a computer with the mobile terminal device, for example, may be portable, pocket-sized, hand-held, computer-built or vehicle-mounted mobile apparatus, which exchange language and/or data with the radio access network. For example, the wireless terminal device is a personal communication service (PCS) phone, a cordless phone, a session initiated protocol (SIP) phone, a wireless local loop (WLL) station, a personal digital assistant (PDA) and other devices. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present disclosure.

The network device involved in the embodiments of the present disclosure may be a base station, and the base station may include a plurality of cells that provide a service for the terminal. According to the different specific application scenarios, the base station may also be called an access point, or may refer to a device in the access network that communicates with the wireless terminal device through one or more sectors on the air interface, or other names. The network device may be configured to exchange a received air frame with an Internet protocol (IP) packet, and serves as a router between the wireless terminal device and the rest of the access network, in which the rest of the access network may include an Internet protocol (IP) communication network. The network device may further coordinate attribute management for the air interface. For example, the network device involved in the embodiments of the present disclosure may be a network device (base transceiver station, BTS) in a global system for mobile communications (GSM) or code division multiple access (CDMA), or a network device (NodeB) in wide-band code division multiple access (WCDMA), and may further be an evolutional Node B (eNB or e-NodeB) in a long term evolution (LTE) system, a 5G base station in a 5G network architecture (next generation system), or a home evolved Node B (HeNB), a relay node, a femto, a pico, etc., which is not limited in the embodiments of the present disclosure. In some network structures, the network device may include a centralized unit (CU) node and a distributed unit (DU) node, and a centralized unit and a distributed unit may also be geographically arranged separately.

There are three frequency domain resource allocation methods in the prior art: Type 0, Type1 and Type2, and the above three methods indicate resource allocation in a band width part (BWP) range.

The above three frequency domain resource allocation methods are briefly introduced:

1. Type0.

Type0 indicates resource block groups (RBGs) allocated to the UE in a form of bitmaps, the RBG is a group of continuous virtual resource blocks, and a size of the RBG is determined by an rbg-Size parameter (indicating config1 or config2) and a size $N_{BWP}^{size}$ of a bandwidth part (BWP) configured by a high level, as shown in the Table 1 (a size P of a standard bandwidth part is shown) below.

Table 1

| Size of bandwidth part | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

Each bit of the bitmap indicates one RBG, and a bit length of the bitmap is equal to $N_{RBG}$, wherein

$$N_{RBG} = \left\lceil (N_{BWP}^{size} + (N_{BWP}^{start} \bmod P))/P \right\rceil ;$$

where, $N_{BWP}^{start}$ is a length of the first bit of the bitmap, a length ( $RBG_0^{size}$ ) of the first RBG in the bandwidth part is:

$$RBG_0^{size} = P - N_{BWP}^{start} \bmod P , \text{ and a length ( } ( RBG_{last}^{size} ) \text{ ) of the last RBG is:}$$

$$RBG_{last}^{size} = \left( N_{BWP}^{start} + N_{BWP}^{size} \right) \bmod P , \text{ if } \left( N_{BWP}^{start} + N_{BWP}^{size} \right) \bmod P > 0 ;$$

The lengths of the RBGs other than the first RBG and the last RBG in the bandwidth part are equal to P.

2. Type1.

Type1 indicates a starting RB ($RB_{start}$) and length ($L_{RBs}$) allocated to the UE within an activated BWP through a resource indication value (RIV). The definition of the RIV is as follows:

if $(L_{RBs} - 1) \le \left\lfloor N_{BWP}^{size}/2 \right\rfloor$ , then

$$RIV = N_{BWP}^{size}(L_{RBs} - 1) + RB_{start}$$

else

$$RIV = N_{BWP}^{size}(N_{BWP}^{size} - L_{RBs} + 1) + (N_{BWP}^{size} - 1 - RB_{start})$$

where $L_{RBs} \ge 1$ and shall not exceed $N_{BWP}^{size} - RB_{start}$ .

3. Type2.

For $\mu=0$, high 6 bits of a resource allocation field indicate a group of indexes $m_0+l$ with mo as a starting index through the RIV. When $0 \leq RIV < M(M+1)/2$, the RIV corresponds to a starting interlace index mo and the number L of consecutive interlace indexes, where $l=0,1,...,L-1$, $m_0 \in \{0,1,...,M-1\}$ contains common resource blocks (CPRB) $\{m,M+m,2M+m,3M+m, ...\}$, M=10, and the RIV is defined as:

If $(L_{RBs}-1) \leq \left\lfloor N_{BWP}^{size}/2 \right\rfloor$, then

$$RIV = M(L-1) + m_0$$

else

$$RIV = M(M-L+1) + (M-1-m_0)$$

When $RIV \geq M(M+1)/2$, a set of values corresponding to the starting interlace index $m_0$ and 1 is specifically defined in Table 2.

Table 2

| RIV-M(M+1)/2 | $m_0$ | 1 |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

For $\mu=1$, M=5. because $m0 \in \{0,1,...,M-1\}$, there are 5 interlace rows in total. The high 5 bits of the resource allocation field indicate the interlace rows allocated to the UE in a form of the bitmap, and interlace 0 to interlace M-1 is mapped to the bitmap in an order from high bit to low bit.

For $\mu=0$ and $\mu=1$, a carrier bandwidth and location are determined by SCS-SpecificCarrier. A guard band in a carrier is determined according to GuardBand in IntraCellGuardBandsPerSCS (including $GB_{s,x}^{start,\mu}$ and $GB_{s,x}^{size,\mu}$ corresponding to startCRB and nrofCRBs). Subsequently, starting and ending CRBs of the available RB set are determined according to the following formula, where $s \in \{0,1,..., N_{RB-set,x} - 1\}$;

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & Remaining \end{cases}$$

and

$$RB_{s,x}^{end,\mu} = N_{grid,x}^{start,\mu} + \begin{cases} N_{grid,x}^{size,\mu} - 1 & s = N_{RB-set,x} - 1 \\ GB_{s,x}^{start,\mu} - 1 & Remaining \end{cases}.$$

The BWP contains some or all of the available RB set described above, it can indicate $RIV_{RB-set}$ through a low

$$Y = \left\lceil \log_2 \frac{N_{RB-SET,UL}^{BWP}(N_{RB-set,UL}^{BWP}+1)}{2} \right\rceil$$

bit of the resource allocation field, wherein $RIV_{RB-set}$ indicates the starting RB set $N_{RB-set,UL}^{start}$ and the number $L_{RB\text{-}set}$ within the BWP, which are allocated to the UE, $N_{RB-set,UL}^{BWP}$ represents the number of RB sets contained in the BWP, and the specific explanation is as follows:

if $(L_{RB-set} - 1) \le \left\lfloor N_{RB-set,UL}^{BWP} / 2 \right\rfloor$ then

$$RIV_{RB-set} = N_{RB-set,UL}^{BWP}(L_{RB-set} - 1) + N_{RB-set,UL}^{start}$$

else

$$RIV_{RB-set} = N_{RB-set,UL}^{BWP}(N_{RB-set,UL}^{BWP} - L_{RB-set} + 1) + (N_{RB-set,UL}^{BWP} - 1 - N_{RB-set,UL}^{start}).$$

It can be seen from the above description that frequency domain resources within a carrier channel or a BWP scope are notified dynamically through DCI in the prior art. When the carrier channel or the BWP is divided into a plurality of sub-bands for uplink and downlink transmission respectively, the frequency domain resource allocation in the full channel or full BWP range above is still used, and it does not support separate frequency domain resource indications for uplink and downlink transmission, which make it impossible for the terminal to obtain frequency domain resources of uplink and downlink transmission. And meanwhile, there may be a surplus of states corresponding to the resource allocation field, which may result in a waste of DCI overheads.

Embodiments of the present disclosure provide a method for determining frequency domain resources, a terminal, a base station and a storage medium, which are used for solving the technical problem in the prior art that it is difficult for a terminal to determine frequency domain resources corresponding to uplink and downlink transmission.

The methods and the apparatus are based on the same concept. Since principles of the methods and the apparatus for solving the problem are similar, the implementations of the apparatus and the methods may refer to each other, and the repetitions will not be repeated.

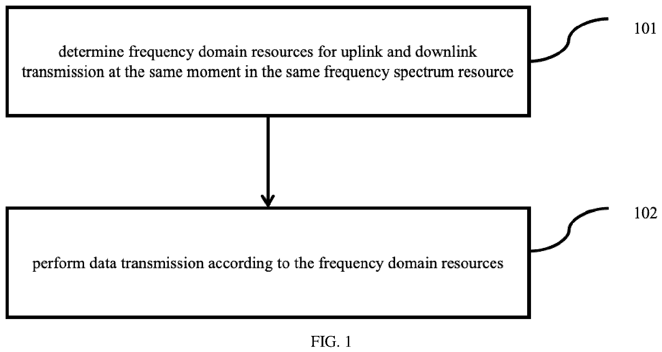

An embodiment of the present disclosure provides a data transmission method, applied to a terminal. Please refer to FIG. 1, a processing process of the method is as follows:

step 101: determining frequency domain resources used for uplink and downlink transmission at the same time unit in the same frequency spectrum resource; and
step 102: performing data transmission according to the frequency domain resources.

The same time unit in step 101 may refer to the same symbol, slot, subframe, etc. For example, frequency domain resources used for uplink and downlink transmission in the same symbol are the frequency domain resources used for uplink and downlink transmission at the same time unit; frequency domain resources used for uplink and downlink transmission in the same slot are frequency domain resources used for uplink and downlink transmission at the same time unit; and frequency domain resources used for uplink and downlink transmission in the same sub-frame are frequency domain resources used for uplink and downlink transmission at the same time unit.

The frequency domain resources used for uplink and downlink transmission at the same time unit may be valid in all time units, for example, be valid in all symbols, slots, subframes or radio frames. The frequency domain resources used for uplink and downlink transmission at the same time unit may also be valid in some time units, for example, be valid in some symbols, slots, subframes, or radio frames, which may be pre-defined through a protocol. The base station may notify the UE of the valid/invalid time units in a configured manner, which may solve a problem of some channels/signals failing in transmission after dividing a frequency spectrum resource into uplink and downlink resources, such as an SSB.

In the embodiments provided by the present disclosure, the frequency domain resources used for uplink and downlink transmission at the same time unit may be distributed at the same frequency point within the same spectrum resource, or may also be the uplink and downlink frequency domain resources with an interval being less than a certain threshold value. The frequency spectrum resource above includes a time division duplex (TDD) band, an frequency division duplex (FDD) band for uplink, an FDD band for downlink, a carrier, a bandwidth part (BWP), or a band for deploying full duplex.

For example, when the frequency spectrum resource on which the uplink and downlink frequency domain resources are distributed is the TDD band, the uplink and downlink frequency domain resources may be distributed at the same frequency point within the TDD band, or may be distributed at different frequency points, and a frequency point interval between the different frequency points is less than the certain threshold value. Similarly, when the frequency spectrum resource on which the uplink and downlink frequency domain resources are distributed is the FDD band for uplink, an FDD band for downlink, the carrier, the BWP, or the band for deploying full duplex, the uplink and downlink frequency domain resources are distributed at the same frequency point or different frequency points within the corresponding frequency spectrum resource, and the frequency point interval between the different frequency points is less than the certain threshold value.

The same frequency spectrum resource above may be an independent NR working frequency band defined in a 3GPP related standard, for example, an independent NR working frequency band defined in a 3GPP TS38.101 v h.4.0 protocol version or a TS38.104 v h.4.0 protocol version. As shown in Table 3, Table 3 is an NR working frequency band in FR1 defined in a certain standard.

Table 3

| NR working frequency band | Uplink working frequency band (base station receiving/terminal sending) $F_{UL\_low}$ - $F_{UL\_high}$ | Downlink working frequency band (base station sending/terminal receiving) $F_{DL\_low}$ - $F_{DL\_high}$ |
|---|---|---|
| n1 | 1920 MHz - 1980 MHz | 2110 MHz - 2170 MHz |
| n2 | 1850 MHz - 1910 MHz | 1930 MHz - 1990 MHz |
| n3 | 1710 MHz - 1785 MHz | 1805 MHz - 1880 MHz |
| n5 | 824 MHz - 849 MHz | 869 MHz - 894 MHz |
| n7 | 2500 MHz - 2570 MHz | 2620 MHz - 2690 MHz |
| n8 | 880 MHz - 915 MHz | 925 MHz - 960 MHz |
| n12 | 699 MHz - 716 MHz | 729 MHz - 746 MHz |
| n13 | 777 MHz - 787 MHz | 746 MHz - 756 MHz |
| n14 | 788 MHz - 798 MHz | 758 MHz - 768 MHz |
| n18 | 815 MHz - 830 MHz | 860 MHz - 875 MHz |
| n20 | 832 MHz - 862 MHz | 791 MHz - 821 MHz |
| n24 | 1626.5 MHz - 1660.5 MHz | 1525 MHz - 1559 MHz |
| n25 | 1850 MHz - 1915 MHz | 1930 MHz - 1995 MHz |
| n26 | 814 MHz - 849 MHz | 859 MHz - 894 MHz |
| n28 | 703 MHz - 748 MHz | 758 MHz - 803 MHz |
| n29 | N/A | 717 MHz - 728 MHz |
| n30 | 2305 MHz - 2315 MHz | 2350 MHz - 2360 MHz |
| n34 | 2010 MHz - 2025 MHz | 2010 MHz - 2025 MHz |
| n38 | 2570 MHz - 2620 MHz | 2570 MHz - 2620 MHz |
| n39 | 1880 MHz - 1920 MHz | 1880 MHz - 1920 MHz |
| n40 | 2300 MHz - 2400 MHz | 2300 MHz - 2400 MHz |
| n41 | 2496 MHz - 2690 MHz | 2496 MHz - 2690 MHz |
| n46 | 5150 MHz - 5925 MHz | 5150 MHz - 5925 MHz |
| n47 | 5855 MHz - 5925 MHz | 5855 MHz - 5925 MHz |
| n48 | 3550 MHz - 3700 MHz | 3550 MHz - 3700 MHz |
| n50 | 1432 MHz - 1517 MHz | 1432 MHz - 1517 MHz |
| n51 | 1427 MHz - 1432 MHz | 1427 MHz - 1432 MHz |
| n53 | 2483.5 MHz - 2495 MHz | 2483.5 MHz - 2495 MHz |
| n65 | 1920 MHz - 2010 MHz | 2110 MHz - 2200 MHz |
| n66 | 1710 MHz - 1780 MHz | 2110 MHz - 2200 MHz |
| n67 | N/A | 738 MHz - 758 MHz |
| n70 | 1695 MHz - 1710 MHz | 1995 MHz - 2020 MHz |

(continued)

| NR working frequency band | Uplink working frequency band (base station receiving/terminal sending) $F_{UL\_low}$ - $F_{UL\_high}$ | Downlink working frequency band (base station sending/terminal receiving) $F_{DL\_low}$ - $F_{DL\_high}$ |
|---|---|---|
| n71 | 663 MHz - 698 MHz | 617 MHz - 652 MHz |
| n74 | 1427 MHz - 1470 MHz | 1475 MHz - 1518 MHz |
| n75 | N/A | 1432 MHz - 1517 MHz |
| n76 | N/A | 1427 MHz - 1432 MHz |
| n77 | 3300 MHz - 4200 MHz | 3300 MHz - 4200 MHz |
| n78 | 3300 MHz - 3800 MHz | 3300 MHz - 3800 MHz |
| n79 | 4400 MHz - 5000 MHz | 4400 MHz - 5000 MHz |
| n80 | 1710 MHz - 1785 MHz | N/A |
| n81 | 880 MHz - 915 MHz | N/A |
| n82 | 832 MHz - 862 MHz | N/A |
| n83 | 703 MHz - 748 MHz | N/A |
| n84 | 1920 MHz - 1980 MHz | N/A |
| n85 | 698 MHz - 716 MHz | 728 MHz - 746 MHz |
| n86 | 1710 MHz - 1780 MHz | N/A |
| n89 | 824 MHz - 849 MHz | N/A |
| n90 | 2496 MHz - 2690 MHz | 2496 MHz - 2690 MHz |
| n91 | 832 MHz - 862 MHz | 1427 MHz - 1432 MHz |
| n92 | 832 MHz - 862 MHz | 1432 MHz - 1517 MHz |
| n93 | 880 MHz - 915 MHz | 1427 MHz - 1432 MHz |
| n94 | 880 MHz - 915 MHz | 1432 MHz - 1517 MHz |
| n95 | 2010 MHz - 2025 MHz | N/A |
| n96 | 5925 MHz - 7125 MHz | 5925 MHz - 7125 MHz |
| n97 | 2300 MHz - 2400 MHz | N/A |
| n98 | 1880 MHz - 1920 MHz | N/A |
| n99 | 1626.5 MHz - 1660.5 MHz | N/A |

Optionally, a width of the frequency spectrum resource described above needs to meet a certain condition, for example, the width of the frequency spectrum resource is greater than or equal to 5 MHz. By setting the width of the frequency spectrum resource to be greater than or equal to 5 MHz, the requirements of bearing a random access channel (RACH) on an uplink resource and bearing an SSB on a downlink resource may be met after dividing the frequency spectrum resource into uplink and downlink resources. For example, the frequency spectrum resource is BWP, and the BWP width supporting uplink and downlink sub-band division needs to be greater than or equal to 5 MHz.

Optionally, in the present embodiment, the width of the frequency domain resources for uplink transmission also needs to meet a certain condition, for example, the width of the frequency domain resources for uplink transmission is greater than or equal to 6 RBs. By setting the width of the frequency domain resources for uplink transmission to be greater than or equal to 6 RBs, the frequency domain resources for uplink transmission may meet the requirements of bearing the RACH and the like.

In the embodiments provided by the present disclosure, the frequency domain resources used for uplink and downlink transmission at the same time unit may include only one frequency domain resource for uplink and downlink transmission, or may include a plurality of frequency domain resources for uplink and/or downlink transmission. The frequency domain resources for uplink and downlink transmission do not overlap with each other, and if there are a plurality of frequency domain resources for uplink and/or downlink transmission, any two of the plurality of frequency domain resources for uplink and/or downlink transmission do not overlap with each other.

In the embodiment provided by the present disclosure, the frequency domain resources used for uplink and downlink transmission at the same time unit in the same frequency spectrum resource may be determined in a predefined manner, a semi-static manner or a dynamic manner.

The first manner is the predefined manner.

If the predefined manner is used, determining the frequency domain resources used for uplink and downlink transmission at the same time unit in the same frequency spectrum resource may be implemented by the following manner:

acquiring the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

The preset uplink and downlink resource division manner described above may be a pre-defined allocating method in a related communication protocol. For example, a division rule of the frequency domain resources used for uplink and downlink transmission is specified in a future communication protocol. When using the frequency domain resources for uplink and downlink transmission, the base station or the terminal may directly acquire the frequency domain resources used for uplink and downlink transmission at the same time unit according to the preset uplink and downlink resource division manner.

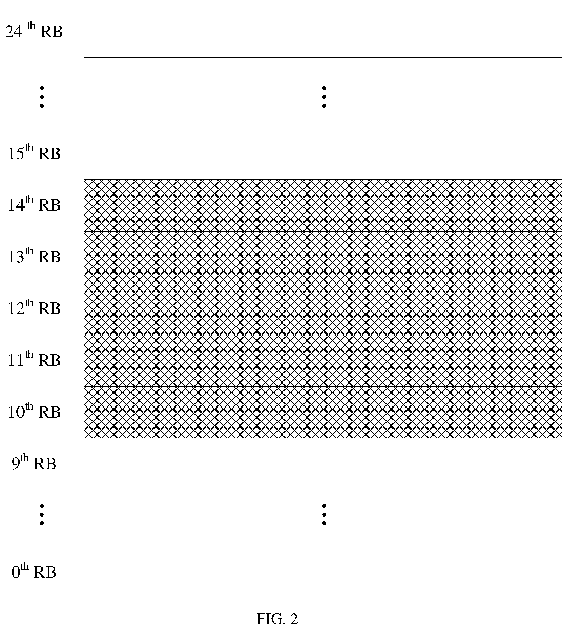

For example, it is specified that the $X^{th}$ RB to the $Y^{th}$ RB in the frequency spectrum resource are frequency domain resources for uplink transmission. For example, please refer to FIG. 2, which is a schematic diagram of a preset uplink and downlink resource division manner provided by an embodiment of the present disclosure. FIG. 2 is a frequency spectrum resource with a magnitude of 5 MHz, and shows 0th RB to 24th RB. In the related communication protocol, it is pre-specified that the 10th RB to the 14th RB in the middle are the frequency domain resources corresponding to uplink transmission (namely, the uplink frequency domain resources), and the remaining frequency domain resources are frequency domain resources corresponding to downlink transmission (namely, the downlink frequency domain resources) or a deployment TDD mode. The uplink frequency domain resources and the downlink frequency domain resources do not overlap with each other.

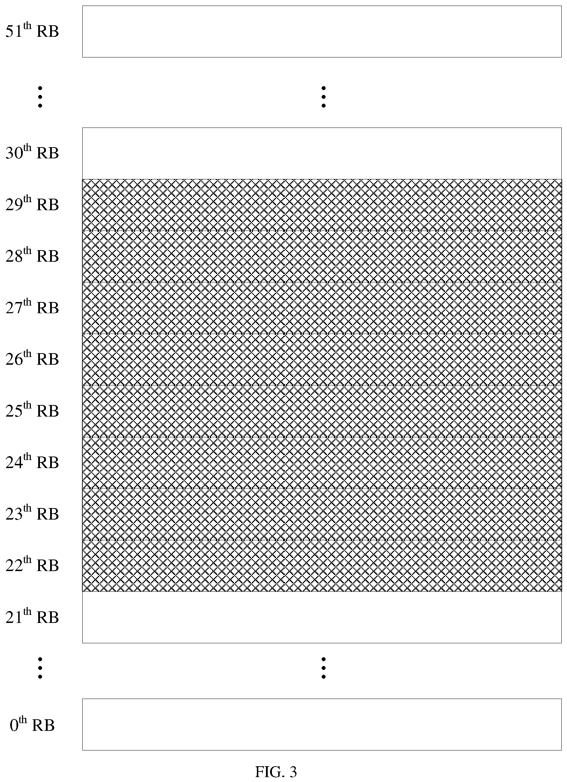

For another example, please refer to FIG. 3, which is a schematic diagram of another preset uplink and downlink resource division manner provided by an embodiment of the present disclosure. FIG. 3 is a frequency spectrum resource with a magnitude of 10 MHz, and shows 0th RB to 51th RB. In the related protocol, it is pre-specified that the 22th RB to the 29th RB in the middle are the frequency domain resources corresponding to uplink transmission, and the remaining frequency domain resources may be used for static/dynamic TDD deployment.

According to the preset uplink and downlink resource division manner above, the terminal may determine the frequency domain resources used for uplink and downlink transmission at the same time unit, and then perform data transmission according to the frequency domain resources used for uplink and downlink transmission at the same time unit.

The uplink and downlink transmission resources here may be applied to a terminal, i.e., the terminal respectively transmits uplink and downlink on the frequency domain resources for uplink and downlink transmission at the same time unit. The uplink and downlink transmission resources may also be applied to different terminals, i.e., at the same time unit, a terminal 1 transmits uplink data using the frequency domain resources for uplink transmission, and a terminal 2 receives downlink data using the frequency domain resources for downlink transmission.

In the embodiment provided by the present disclosure, a part of resources may further be reserved on two sides of the frequency spectrum resource, and the part of resources is not divided into frequency domain resources for uplink and downlink transmission. In this way, interference between adjacent operators may be suppressed.

In a case that there is only one of frequency domain resource for uplink and downlink transmission among the frequency domain resources used for uplink and downlink transmission at the same time unit, the terminal may directly use the corresponding frequency domain resources.

For example, the terminal determines, according to the preset uplink and downlink resource division manner, that the frequency domain resources used for uplink and downlink transmission at the same time unit in the same frequency spectrum resource include that the uplink frequency domain resources are the 6th RB, and the downlink frequency domain resources are the 8th RB, and when uplink data transmission needs to be performed, the terminal may directly use the 6th RB to perform uplink data transmission according to the frequency domain resources that are used for uplink and downlink transmission at the same time unit and are determined in the predefined manner (uplink: the 6th RB, and downlink: the 8th RB); and when downlink data reception needs to be performed, the terminal may directly use the 8th RB to perform downlink data reception.

Granularity of the frequency domain resources above may be at an RB level, may also be at an RB group level, may further be at a carrier level, etc. The granularity of the frequency domain resources used for uplink/downlink transmission takes six resource blocks (RBs) as a unit, and a starting resource block (RB) index of the frequency domain resources used for uplink and/or downlink transmission is an integer multiples of 6. For example, a frequency domain resource of a core set (also referred to as a control resource set, CORESET) is a multiple of six RBs, and a starting RB index of the CORESET is an integer multiples of 6. Therefore, the granularity of the frequency domain resources used for downlink transmission takes six RBs as a unit, and meanwhile, the starting RB index of the frequency domain resources used for downlink transmission is the integer multiples of 6, which can effectively match a design of a control channel. Meanwhile, in order to keep the divided granularity of the frequency domain resources used for uplink transmission and downlink transmission consistent, the granularity of the frequency domain resources for uplink transmission also takes six RBs as a unit, and the starting RB index of the frequency domain resources for uplink transmission is also the integer multiples of 6.

In the embodiment provided by the present disclosure, the frequency domain resources used for uplink and downlink transmission at the same time unit and acquired according to the preset uplink and downlink resource division manner may take effect when the base station indicates duplex switching, and may also take effect at a $k^{th}$ symbol or slot after the base station indicates the duplex switching, where k is an integer, and the k value may be notified or predefined by DCI configuration or RRC signaling.

The second manner is the semi-static manner.

If the semi-static manner is used, determining the frequency domain resources used for uplink and downlink transmission at the same time unit in the same frequency spectrum resource may be implemented in the following manner: receiving radio resource control (RRC) signaling, the RRC signaling being used for configuring the frequency domain resources used for uplink and downlink transmission at the same time unit in the frequency spectrum resource; and determining the frequency domain resources used for uplink and downlink transmission at the same time unit according to the RRC signaling.

For example, the base station notifies, by the RRC signaling, the terminal that the frequency domain resources used for uplink and downlink transmission at the same time unit in the TDD band include that: the uplink frequency domain resources are $M^{th}$ RB to $N^{th}$ RB in the TDD band, and/or the downlink frequency domain resources are $P^{th}$ RB to $Q^{th}$ RB in the TDD band, where M, N, P and Q are non-negative integers, N is greater than M, and Q is greater than P. After receiving the RRC signaling above, the terminal may accordingly determine that the frequency domain resources used for uplink and downlink transmission at the same time unit in the TDD band include that: the uplink frequency domain resources are the $M^{th}$ RB to the $N^{th}$ RB in the TDD band, and/or the downlink frequency domain resources are the $P^{th}$ RB to the $Q^{th}$ RB in the TDD band.

Similarly, when the frequency spectrum resource is the FDD band for uplink, or the FDD band for downlink, or the carrier, or the BWP, or the band for deploying full duplex, a processing manner is similar to the processing manner when the frequency spectrum resource is the TDD band, and will be not repeated.

In the embodiment provided by the present disclosure, the RRC signaling is used for configuring frequency domain resources corresponding to a cell level or a terminal group level or a terminal level. That is, the base station may perform configuration according to the cell level, the UE group level, or the UE level when configuring the frequency domain resources used for uplink and downlink transmission at the same time unit. The configured frequency domain resources used for uplink and downlink transmission at the same time unit may be that, within the range of a frequency band, a carrier or a BWP, the base station sends the configured frequency domain resources of the cell level or the terminal group level or the terminal level to the terminal by the RRC signaling.

For example, in the same frequency spectrum resource, the base station may configure the frequency domain resources used for uplink and downlink transmission at the same time unit for each cell under control, may also configure the frequency domain resources used for uplink and downlink transmission at the same time unit for each UE group, and may further configure the frequency domain resources used for uplink and downlink transmission at the same time unit for each UE. After completing the above configuration, the base station may notify the terminal of the above configuration results through the RRC signaling. After receiving the above RRC signaling, the terminal determines the frequency domain resources used for uplink and downlink transmission at the same time unit according to the RRC signaling. In the embodiment provided by the present disclosure, the part of resources may further be reserved on two sides of the frequency spectrum resource, and the part of resources is not divided into frequency domain resources for uplink and downlink transmission. In this way, interference between adjacent operators may be suppressed.

For example, for cases that the uplink frequency domain resources are the $M^{th}$ RB to the $N^{th}$ RB of a frequency spectrum resource, and the downlink frequency domain resources are the $P^{th}$ RB to the $Q^{th}$ RB of the frequency spectrum resource, M and P may be limited to be greater than K, where K is greater than or equal to a serial number of the first RB of the frequency spectrum resource, and P and Q are less than a serial number of the maximum RB of the frequency spectrum resource. For example, for the frequency spectrum resource corresponding to the 5 MHz channel, it is specified that the 2nd RB to the 6th RB are the uplink frequency domain resources, and the 8th RB to the 12th RB are the downlink frequency domain resources. In this way, at two ends of the uplink frequency domain resources, there are resources such as the 0th RB to 1st RB and the 7th RB that are not divided into the frequency domain resources for uplink and downlink transmission, and at two ends of the downlink frequency domain resources, there are resources such as the 7th RB and the 13th RB that are not divided into the frequency domain resources for uplink and downlink transmission. Therefore, some resources may be reserved on two sides of both the uplink frequency domain resources and the downlink frequency domain resources to form a protection interval, which can suppress the interference between operators due to inconsistent uplink and downlink transmission directions.

The third manner is the dynamic manner.

When the predefined or semi-static manner above is used, and when it is determined that the frequency domain resources used for uplink and downlink transmission at the same time unit in the same frequency spectrum resource include a plurality of frequency domain resources used for uplink transmission and/or downlink transmission, the base station notifies the terminal of one or more frequency domain resources used for uplink transmission and/or downlink transmission in the plurality of frequency domain resources used for uplink transmission and/or downlink transmission through DCI. At this point, determining, by the terminal, that the frequency domain resources used for uplink and downlink transmission at the same time unit in the same frequency spectrum resource include the plurality of frequency domain resources used for uplink transmission and/or downlink transmission may be implemented in the following manner:

receiving the downlink control information (DCI), the DCI being used for notifying the terminal to use one or more frequency domain resources used for uplink transmission and/or downlink transmission in the plurality of frequency domain resources used for uplink transmission and/or downlink transmission; and determining the one or more frequency domain resources used for uplink transmission and/or downlink transmission according to the DCI. When needing to perform data transmission, the terminal may perform data transmission according to the one or more frequency domain resources used for uplink transmission and/or downlink transmission and determined by the DCI.

Regardless of the manner used to determine the frequency domain resources used for uplink and downlink transmission at the same time unit in the same frequency spectrum resource, when using the frequency domain resources used for uplink and downlink transmission at the same time unit, it may only use frequency domain resources in one transmission direction, or use frequency domain resources in both transmission directions simultaneously, or not use frequency domain resources in any transmission direction.

For example, within the TDD band, the determined frequency domain resources used for uplink and downlink transmission at the same time include one uplink frequency domain resource and one downlink frequency domain resource. The base station may use the downlink frequency domain resource to send downlink data to the terminal 1, while using the uplink frequency domain resource to receive uplink data sent by the terminal 2. For the terminal 1, the terminal 1 uses the downlink frequency domain resource to receive the downlink data sent by the base station, and for the terminal 2, the terminal 2 uses the uplink frequency domain resource to send the uplink data to the base station. If at the current time unit, only the terminal 1 needs to receive the downlink data from the base station and no terminal sends the uplink data, the base station only uses the downlink frequency domain resources to send the downlink data to the terminal 1. If there is neither uplink data transmission nor downlink data transmission at a certain time unit, it does not use the frequency domain resources in any transmission direction.

For another example, within the BWP, the determined frequency domain resources used for uplink and downlink transmission at the same time unit include three uplink frequency domain resources and three downlink frequency domain resources. The base station notifies, through the DCI, the terminal 1 to use the uplink frequency domain resource 2 and the downlink frequency domain resource 2 for data transmission, and further notifies, through the DCI, the terminal 2 to use the uplink frequency domain resource 3 and the downlink frequency domain resource 3 for data transmission. At a certain time unit, the terminal 1 needs to send the uplink data to the base station, and the terminal 2 needs to receive the downlink data sent by the base station, thus the terminal 1 uses the uplink frequency domain resource 2 to send the uplink data to the base station, while the terminal 2 uses the downlink frequency domain resource 3 to receive the downlink data from the base station.

The solution of the dynamic manner is introduced as follows:

solution 1: dynamic manner based on predefinition:

if the predefined manner is used to determine that there are a plurality of frequency domain resources used for uplink and downlink transmission at the same time unit in the same frequency spectrum resource, the base station notifies the terminal of the one or more frequency domain resources used for uplink transmission and/or downlink transmission among the plurality of frequency domain resources used for uplink transmission and/or downlink transmission through the DCI.

Through the predefined manner above, the same frequency spectrum resource is divided into a plurality of uplink/downlink sub-bands, and the size and number of sub-bands depend on the size of the frequency spectrum resource or network/base station configuration. The base station dynamically configures the sub-bands specifically used by the UE through the DCI.

For example, for the size of the frequency spectrum resource being greater than or equal to L RBs, the size of the sub-bands is k1; for the size of the frequency spectrum resource being less than or equal to L RBs, the size of the sub-bands is k2; or the network/base station configures the size of the sub-bands through the RRC/DCI. The number of the sub-bands (denoted as num) is determined by the size of the frequency spectrum resource and the size of the sub-band (denoted as sub-band size), i.e., num=ceil (bandwidth of the frequency spectrum resource/sub-band size), ceil is an upward rounding function, and / is a division symbol. When the frequency spectrum resource is BWP, the bandwidth of the frequency spectrum resource in the above formula is the size of the BWP. Furthermore, the frequency spectrum resource may further be divided into a plurality of intervals (such as three or more intervals), each interval defines different sub-band sizes, and the sub-band size of each interval may be predetermined, configured by the RRC or configured by the DCI. The number of sub-bands in each interval is calculated according to the size of the sub-bands in each interval, and the calculation method is the same as the above case without interval division, and will not be repeated here.

In addition, the part of resources may further be reserved on two sides of the frequency spectrum resource, and is not divided into frequency domain resources for uplink and downlink transmission. For example, z RBs may be reserved on the two sides of the frequency spectrum resource without dividing the frequency domain resources for uplink and downlink transmission, and Z is a natural number. For example, z1 RBs and z2 RBs may be respectively reserved on the two sides of the frequency spectrum resource without dividing the frequency domain resources for uplink and downlink transmission, z1 and z2 are natural numbers, and z1 and z2 may be different.

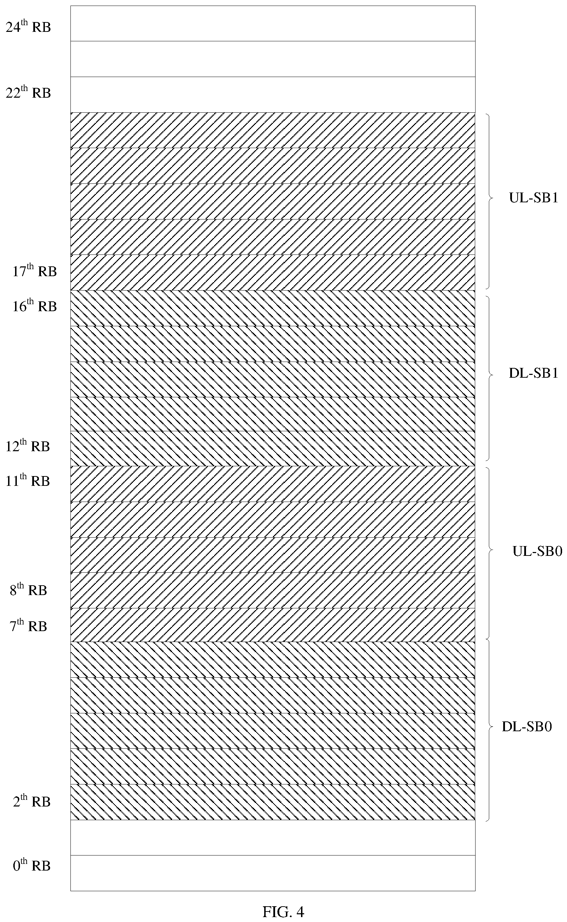

Please refer to FIG. 4, which is a schematic diagram of sub-band division provided by an embodiment of the present disclosure. The 0th-1st RBs and 22th-24th RBs of the BWP serve as the part of reserved frequency domain resources, while the other RBs are divided into sub-bands. Each sub-band includes five RBs, and is divided into four sub-bands: DL-SBO (the 2nd RB to the 6th RB), UL-SBO (the 7th RB to the 11th RB), DL-SB1 (the 12th RB to the 16th RB), and UL-SB1 (the 17th RB to the 21st RB). In this way, interference between adjacent operators is suppressed by reserving the part of RBs on the two sides of the BWP without dividing the frequency domain resources for uplink and downlink transmission.

In addition, a static or dynamic TDD may further be deployed on the reserved RBs above to maintain alignment of uplink and downlink transmission directions between the adjacent operators, thereby suppressing cross interference between the adjacent operators.

In the embodiment provided by the present disclosure, there is an association relationship between the uplink frequency domain resources and the downlink frequency domain resources in the plurality of uplink and downlink frequency domain resources, and the association relationship may be a relationship in which the uplink frequency domain resources and the downlink frequency domain resources are configured in pairs, and as shown in FIG. 4, the UL-SBO and the DL-SBO may constitute a sub-band pair to form the association relationship above. The base station may configure the sub-band pair in pairs, for example, an uplink is configured with the UL-SBO, the downlink is correspondingly configured with the DL-SBO, and a downlink sub-band is no longer specifically configured, or vice versa. When there are a plurality of sub-band pairs, for example, the UL-SBO and the DL-SBO form a sub-band pair 0, and the UL-SB1 and the DL-SB1 form a sub-band pair 1, the base station may notify the terminal of an uplink sub-band and a downlink sub-band specifically used by the terminal by a serial number of the sub-band pair indicated by the DCI. The terminal may determine the serial number of the sub-band pair specifically used by the terminal according to the DCI, and then select the corresponding sub-band according to the serial number for data transmission.

The base station dynamically notifies, by means of the DCI, the terminal to use a certain sub-band specifically used in a pre-defined sub-band set. A special indication field may be defined in the DCI above by means of DCI notification for scheduling a PDSCH or a PUSCH. For example, a field with a bit length of 1 is defined in the DCI above to indicate one of two uplink sub-bands or downlink sub-bands in FIG. 4.

The base station dynamically notifies, by means of the DCI, the terminal to use the certain sub-band specifically used in the pre-defined sub-band set, and may further use an $X^{th}$ bit of the frequency domain resource allocation field in the DCI to perform indication, for example, a highest bit or a lowest bit of the frequency domain resource allocation field is used to indicate one of the two uplink or downlink sub-bands in FIG. 4.

How many bits are specifically used in the DCI to indicate the uplink sub-band or the downlink sub-band actually used by the terminal may be determined according to the total number of uplink sub-bands or the total number of downlink sub-bands included in the predefinition.

The base station dynamically notifies, by the DCI, the terminal to use the certain sub-band specifically used in the pre-defined sub-band set, and may further notify by using the DCI configured with the uplink and/or downlink frequency domain resources. The DCI may instruct the terminal to use the certain sub-band in the pre-defined sub-band set, and the above indication may take effect immediately or after a specified interval duration. For example, the terminal receives the above indication of the DCI in a slot n, and updates the sub-band for uplink/downlink transmission immediately, that is, the sub-band indicated in the DCI is used in the uplink/downlink transmission in the slot n. The sub-band for uplink/downlink transmission may also be updated in an n+offset slot according to a specified interval duration (for example, at an interval of offset slots), that is, the sub-band indicated in the DCI is used in the uplink/downlink transmission in the n+offset slot. A value of the offset is related to a radio frequency capability (namely, the time required for switching the sub-band) of the terminal, and different offsets may be defined for terminals with different capabilities. The base station may judge whether the DCI is received successfully by the UE according to an implementation algorithm. After the downlink sub-band is scheduled for the DCI and the sub-band takes effect, the base station may determine whether to resend the DCI according to an HARQ-ACK feedback corresponding to a transport block sent on the sub-band, for example, if all HARQ-ACKs corresponding to K transport blocks sent consecutively are NACKs, the base station determines to resend the DCI. After the uplink sub-band is scheduled for the DCI and the sub-band takes effect, the base station may determine whether to resend the DCI according to a situation of a transport block received on the sub-band, for example, if the consecutive M transport blocks are received unsuccessfully, the base station determines to resend the DCI. The terminal performs data transmission according to the frequency domain resources notified by the DCI after receiving the DCI successfully.

Solution 1: dynamic manner based on semi-static configuration:

After determining the plurality of frequency domain resources for uplink and downlink at the same time unit in the same frequency spectrum resource, the base station sends the plurality of frequency domain resources used for uplink and downlink at the same time unit to the terminal by RRC signaling, and dynamically notifies, by the DCI, the terminal that the terminal uses one or more of the plurality of frequency domain resources used for uplink transmission and/or downlink transmission.

The base station configures, by the RRC signaling, that an uplink sub-band set containing {UL-SB0, UL-SB1, ..., UL-SB n} and a downlink sub-band set containing {DL-SB0, DL-SB1, ..., DL-SB n} of a frequency spectrum resource constitute the frequency domain resources used for uplink and downlink transmission at the same time unit, wherein the UL-SBO contain an $(X0)^{th}$ RB to a $(Y0)^{th}$ RB in the frequency spectrum resource, the UL-SB1 contains an $(X1)^{th}$ RB to a $(Y1)^{th}$ RB in the frequency spectrum resource, and UL-SBn contains an $(Xn)^{th}$ RB to a $(Yn)^{th}$ RB in the frequency spectrum resource, $X0<Y0<X1<Y1...<Xn<Yn$; and the DL-SBO contains a $(P0)^{th}$ RB to a $(Q0)^{th}$ RB in the frequency spectrum resource, the DL-SB1 contains a $(P1)^{th}$ RB to a $(Q1)^{th}$ RB in the frequency spectrum resource, and DL-SBn contains a $(Pn)^{th}$ RB to a $(Qn)^{th}$ RB in the frequency spectrum resource, where $P0<Q0<P1<Q1 ... <Pn<Qn$, and n is a positive integer. Optionally, a size of n may depend on a size of the frequency spectrum resource. X0, X1, Xn, Y0, Y1, Yn, P0, P1, Pn, Q0, Q1, and Qn are non-negative integers. The base station may dynamically notify the terminal of the sub-band used by the terminal through the DCI (for example, the downlink transmission uses the DL-SB 1 sub-band, and the uplink transmission uses the UL-SB1). The terminal performs data transmission according to the frequency domain resources notified by the DCI.

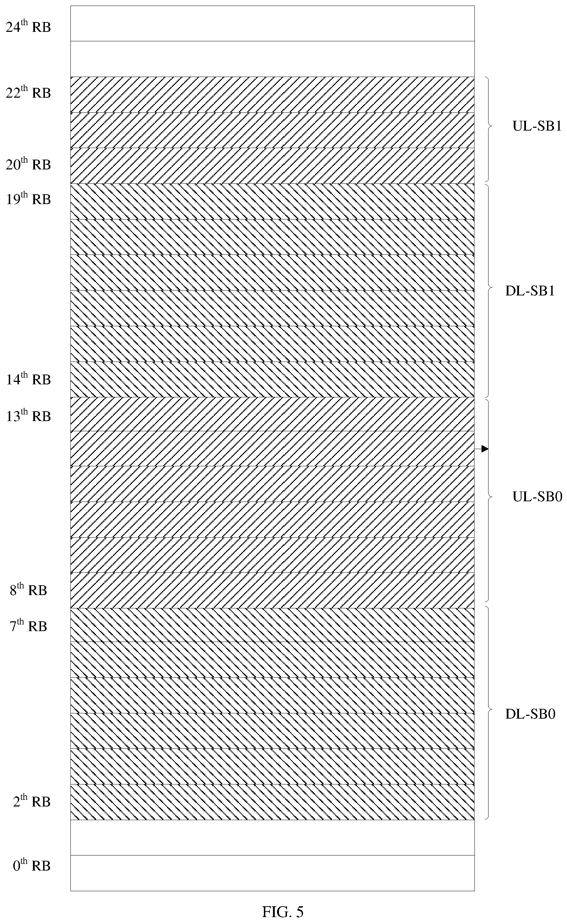

A part of resources which are not subjected to frequency domain resource division of uplink and downlink transmission may be set at two ends of the uplink sub-band set and the downlink sub-band set, and specifically, during setting, X0 and/or P0 may be limited to be greater than $\alpha$, and a difference between the Yn as well as the Qn and the maximum RB index in the frequency spectrum resource is greater than $\beta$, where $\alpha$ and $\beta$ are greater than or equal to 0. The $\alpha$ and $\beta$ may be specified in a protocol, configured by the RRC, or configured by the DCI. For example, for the frequency spectrum resource of 5 MHz (including the 0th RB to the 24th RB), the uplink sub-band set contains {UL-SB0, UL-SB1}, and the downlink sub-band set contains {DL-SB0, DL-SB1}. An RB corresponding to each sub-band is as shown in FIG. 5 below. FIG. 5 is a schematic diagram of another sub-band division provided by an embodiment of the present disclosure. The 2nd RB (namely, P0) is greater than 1, and a difference between the 22th RB (namely, Yn) and the maximum RB index (namely, 24) is 2 (greater than 1). By reserving the RBs on two sides of the frequency spectrum resource and deploying the static TDD/the dynamic TDD within the range of the reserved RBs, interference between the adjacent operators may be suppressed.

The uplink sub-band and the downlink sub-band in the uplink sub-band set and the downlink sub-band set may have a binding or association relationship, for example, the UL-SBO and the DL-SBO form the sub-band pair, and the base station may configure the uplink sub-band and the downlink sub-band in pairs for the terminal (for example, if the uplink sub-band used by the terminal is configured as UL-SBO, the downlink sub-band is DL-SBO, and vice versa). Optionally, the terminal may also form the sub-band pair by using the uplink sub-band and the downlink sub-band (for example, the UL-SB1 and the DL-SB1 form the sub-band pair 1). The base station indicates a serial number of the sub-band pair by the DCI, and the terminal may determine the uplink sub-band and the downlink sub-band actually used by the terminal according to the serial number of the sub-band pair indicated by the DCI, and perform data transmission according to the uplink sub-band and the downlink sub-band notified by the DCI.

Based on the plurality of frequency domain resources used for uplink and downlink transmission at the same time unit and configured by the base station, the base station may send the one or more of the plurality of above configured frequency domain resources to the terminal by defining a field (e. g., a frequency domain resource allocation field, a sub-band indication field, or a sub-band allocation field) corresponding to dedicated frequency domain resource allocation information in the DCI used for scheduling the PDSCH/PUSCH. For example, with regard to DCI Format 0_1/Format 0_2/Format 1_1/Format 1_2, it may define a new sub-band allocation field, which is specifically used for indicating the uplink sub-band or the downlink sub-band of the UE. After receiving the DCI used for scheduling the PDSCH/PUSCH, the terminal determines, according to the field corresponding to the frequency domain resource allocation information in the DCI used for scheduling the PDSCH/PUSCH, the one or more frequency domain resources used for uplink transmission and/or downlink transmission for data transmission.

The base station may further indicate a location of the sub-band actually used by the terminal through high or low X bit(s) of the field corresponding to the frequency domain allocation information in the DCI used for scheduling the PDSCH/PUSCH. For example, for DCI Format 0_1/Format 0_2/Format 1_1/Format 1_2, the high/low X bit(s) of the frequency domain resource allocation field is used to indicate the uplink sub-band or the downlink sub-band of the UE.

In the DCI used for scheduling the PDSCH/PUSCH, the uplink sub-band or the downlink sub-band allocated by the base station to the terminal may further be determined in a predefined manner. For example, for that the frequency domain allocation field in DCI Format 0_0/DCI Format 1_0 does not indicate the sub-band location, it can pre-define the first or last uplink or downlink sub-band in the uplink or downlink sub-band set configured by the RRC as the uplink or downlink sub-band allocated to the terminal by the base station. In this way, the frequency domain resources used by the terminal do not need to be notified by using the frequency domain allocation field in the DCI, which may save signaling overheads.

Optionally, the base station notifies the terminal of the actually-used frequency domain resources by all or some bits of the frequency domain resource allocation field in the DCI used for scheduling the PDSCH/PUSCH. For example, the Type0/Type1/Type2 method may be used to dynamically notify the terminal of the frequency domain resources specifically used, and for Type2, M may be pre-defined as other positive integer values except 5 and 10.

The base station may further use the DCI configured with the uplink and/or downlink frequency domain resources to notify the terminal of the specific location of the frequency domain resources used. For example, a newly defined DCI format is used for indicating the certain sub-band in the sub-band set configured by the RRC, and the terminal may update the used sub-band immediately after receiving the DCI, and may also update the used sub-band after a period of time after receiving the DCI. If the terminal receives the newly defined DCI in the slot n to be notified to use the sub-band 1 for uplink transmission, the terminal immediately updates the sub-band for uplink transmission to the sub-band 1. Alternatively, if the terminal receives the newly defined DCI in the slot n to be notified to use the sub-band 1 for uplink transmission, the terminal may update the sub-band for uplink transmission to the sub-band 1 after an interval of offset slots, i.e., the sub-band for uplink transmission is updated to the sub-band 1 in the $(n+offset)^{th}$ slot. The offset may be determined according to an RF capability of the terminal (such as a duration required for switching the sub-band), and different offsets may be set for the terminals with different RF capabilities. The offset is pre-defined, configured by the RRC or configured by the DCI.

Optionally, the base station may judge whether the DCI is received successfully by the UE according to the implementation algorithm. After the downlink sub-band is scheduled by the DCI and the sub-band takes effect, the base station may determine whether to resend the DCI according to the HARQ-ACK feedback corresponding to the transport block sent on the sub-band, for example, if all HARQ-ACKs corresponding to the K transport blocks sent consecutively are NACKS, the base station determines to resend the DCI. After the uplink sub-band is scheduled by the DCI and the sub-band takes effect, the base station may determine whether to resend the DCI according to the situation of the transport block received on the sub-band, for example, if the consecutive M transport blocks are received unsuccessfully, the base station determines to resend the DCI.

Optionally, the base station may also determine that the UE has successfully received the DCI according to the ACK information fed back by the UE for correct reception of the DCI. Optionally, the validation time of the DCI may be a time unit when the DCI is received, or the DCI may take effect after the feedback of the correct reception of the DCI, that is, after the base station receives the feedback that the DCI is correctly received, the base station performs data transmission on the sub-band notified by the DCI. It can configure the valid duration of the sub-band through the DCI, and may configure the specific duration by high-level signaling, or may also update the sub-band configuration by re-configuring the sub-band.

In the embodiments provided by the present disclosure, by determining the frequency domain resources used for uplink and downlink transmission at the same time unit in the same frequency spectrum resource, the terminal can determine the frequency domain resources used for uplink and downlink transmission at the same time unit, and then perform data transmission. In addition, in the embodiments provided by the present disclosure, since the base station may dynamically schedule the uplink or downlink frequency domain resources by the DCI, compared with a dynamic scheduling manner within a full channel bandwidth in the prior art, it may save DCI overheads and improve reliability of DCI transmission.

Based on the same concept, an embodiment of the present disclosure further provides a data transmission method, applied to a base station, and including:

determining frequency domain resources used for uplink and downlink transmission at the same time unit in the same frequency spectrum resource; and performing data transmission according to the frequency domain resources.

The frequency spectrum resource above includes a TDD band, an FDD band for uplink, an FDD band for downlink, a carrier, a BWP, or a band for deploying full duplex. For relevant explanation of the same time unit and the frequency domain resources used for uplink and downlink transmission at the same time unit, it can refer to the description at the terminal side, which will not be repeated here.

The frequency domain resources used for uplink and downlink transmission at the same time unit may be valid in all time units, for example, be valid in all symbols, slots, subframes or radio frames. The frequency domain resources used for uplink and downlink transmission at the same time unit may also be valid in some time units, for example, be valid in some symbols, slots, subframes, or radio frames, which may be pre-defined by a protocol. The base station may notify the UE of the valid/invalid time units in a configured manner, which may solve a problem of some channels/signals failing in transmission after dividing a frequency spectrum resource into uplink and downlink resources, such as an SSB.

Optionally, a width of the frequency spectrum resource needs to meet a certain condition, for example, the width of the frequency spectrum resource is greater than or equal to 5 MHz. By setting the width of the frequency spectrum resource to be greater than or equal to 5 MHz, it can meet the requirements of bearing an RACH on an uplink resource and bearing an SSB on a downlink resource after dividing the frequency spectrum resource into uplink and downlink resources. For example, the frequency spectrum resource is BWP, and the BWP width supporting uplink and downlink sub-band division needs to be greater than or equal to 5 MHz.

Optionally, in the present embodiment, the width of the frequency domain resources for uplink transmission also needs to meet a certain condition, for example, the width of the frequency domain resources for uplink transmission is greater than or equal to 6 RBs. By setting the width of the frequency domain resources for uplink transmission to be greater than or equal to 6 RBs, the frequency domain resources for uplink transmission may meet the requirements of bearing the RACH and the like.

In the embodiments provided by the present disclosure, the frequency domain resources used for uplink and downlink transmission at the same time unit may include only one frequency domain resource for uplink and downlink transmission, or may include a plurality of frequency domain resources for uplink and/or downlink transmission. The frequency domain resources for uplink and downlink transmission do not overlap with each other, and if there are the plurality of frequency domain resources for uplink and downlink transmission, any two of the plurality of frequency domain resources for uplink and downlink transmission do not overlap with each other.

Similar to the terminal side, the base station side may also determine the frequency domain resources used for uplink and downlink transmission at the same time unit in the same frequency spectrum resource in a predefined manner, a semi-static manner or a dynamic manner, which is specifically as follows:

When using the predefined manner:

determining the frequency domain resources used for uplink and downlink transmission at the same time unit in the same frequency spectrum resource may be implemented in the following manner:

acquiring the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

The preset uplink and downlink resource division manner described above may be a pre-defined allocating method in a related communication protocol. For example, a division rule of the frequency domain resources used for uplink and downlink transmission is specified in a future communication protocol. When using the frequency domain resources for uplink and downlink transmission, the base station or the terminal may directly acquire the frequency domain resources used for uplink and downlink transmission at the same time unit according to the preset uplink and downlink resource division manner. The specific embodiments may refer to the description on the terminal side, and will not be repeated here.

In the embodiment provided by the present disclosure, the part of resources may further be reserved on two sides of the frequency spectrum resource, and the part of resources is not divided into frequency domain resources for uplink and downlink transmission, which may suppress interference between adjacent operators.

In a case that there is only one frequency domain resources for uplink and downlink transmission among the frequency domain resources used for uplink and downlink transmission at the same time unit, the base station may directly use the corresponding frequency domain resource.

Granularity of the frequency domain resources above may be at an RB level, may also be at an RB group level, or may further be at a carrier level, etc. The granularity of the frequency domain resources used for uplink/downlink transmission takes six resource blocks (RBs) as a unit, and a starting RB index of the frequency domain resources used for uplink and/or downlink transmission is an integer multiples of 6. For example, a frequency domain resource of a CORESET is a multiple of six RBs, and a starting RB index of the CORESET is an integer multiples of 6. Therefore, the granularity of the frequency domain resources used for downlink transmission takes six RBs as a unit, and meanwhile, the starting RB index of the frequency domain resources used for downlink transmission is the integer multiples of 6, which can effectively match a design of a control channel. Meanwhile, in order to keep the dividing granularity of the frequency domain resources used for uplink transmission and downlink transmission consistent, the granularity of the frequency domain resources for uplink transmission also takes six RBs as a unit, and the starting RB index of the frequency domain resources for uplink transmission is also the integer multiples of 6.

In the embodiment provided by the present disclosure, the frequency domain resources used for uplink and downlink transmission at the same time unit and acquired according to the preset uplink and downlink resource division manner may take effect when the base station indicates duplex switching, and may also take effect at a $k^{th}$ symbol or slot after the base station indicates the duplex switching, where k is an integer, and the k value may be notified or predefined by DCI configuration or RRC signaling.

When using the semi-static manner:

Determining the frequency domain resources used for uplink and downlink transmission at the same time unit in the same frequency spectrum resource, i.e., the base station determines the frequency domain resources used for uplink and downlink transmission at the same time unit in the same frequency spectrum resource, and then the base station sends the frequency domain resources above to the terminal through RRC signaling. After receiving the RRC signaling, the terminal determines the frequency domain resources used for uplink and downlink transmission at the same time unit in the same frequency spectrum resource according to the RRC signaling. In this way, both parties may perform data transmission according to the frequency spectrum resource described above.

In a possible implementation, sending the frequency domain resources to the terminal through the radio resource control (RRC) signaling may further be implemented in the following manners:

the RRC signaling being a cell level or a terminal group level or a terminal level; and sending the frequency domain resources of the cell level or the terminal group level or the terminal level to the terminal through the RRC signaling.

The base station may perform configuration according to the cell level, the UE group level, or the UE level when configuring the frequency domain resources used for uplink and downlink transmission at the same time unit. The configured frequency domain resources used for uplink and downlink transmission at the same time unit may be that, within the range of a frequency band, a carrier or a BWP, the base station may notify the terminal of the frequency domain resources used for uplink and downlink transmission at the same time unit through the RRC signaling.

The base station may configure the frequency domain resources used for uplink and downlink transmission at the same time unit for each cell under control within the same frequency spectrum resource, may also configure the frequency domain resources used for uplink and downlink transmission at the same time unit for each UE group, and may further configure the frequency domain resources used for uplink and downlink transmission at the same time unit for each UE. After completing the above configuration, the base station may notify the terminal of the above configuration through the RRC signaling.

In the embodiment provided by the present disclosure, part of resources may further be reserved on two sides of the frequency spectrum resource, and the part of resources is not divided into frequency domain resources for uplink and downlink transmission, which may suppress interference between adjacent operators.

When using the dynamic manner:

the base station first determines the frequency domain resources used for uplink and downlink transmission at the same time unit within the same frequency spectrum resource, wherein the frequency domain resources include a plurality of frequency domain resources used for uplink transmission and/or downlink transmission; then determines, from the plurality of frequency domain resources used for uplink transmission and/or downlink transmission, one or more frequency domain resources used for uplink transmission and/or downlink transmission used by the terminal; and sends information of the one or more frequency domain resources used for uplink transmission and/or downlink transmission to the terminal through downlink control information (DCI).

The determining, by the base station, the frequency domain resources used for uplink and downlink transmission at the same time unit in the same frequency spectrum resource described above may be determined by the self-defined or semi-static manner. The solution of the specific dynamic manner is introduced as follows:

the dynamic manner based on predefinition:

the base station acquires the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner, and the frequency domain resources include a plurality of frequency domain resources used for uplink transmission and/or downlink transmission; and the base station determines, from the plurality of frequency domain resources used for uplink transmission and/or downlink transmission, one or more frequency domain resources used for uplink transmission and/or downlink transmission used by the terminal, and sends location information of the one or more frequency domain resources used for uplink transmission and/or downlink transmission to the terminal through the DCI.

The terminal, after receiving the DCI described above, acquires the frequency domain resources used for uplink and downlink transmission at the same time unit according to the preset uplink and downlink resource division manner, wherein the frequency domain resources are obtained by dividing the frequency spectrum resource according to the preset uplink and downlink resource division manner, and the frequency domain resources include the plurality of frequency domain resources (that is, the frequency domain resources used for uplink and downlink transmission at the same time unit are determined by using the predefined manner) used for uplink transmission and/or downlink transmission; and the terminal determines, from the plurality of frequency domain resources used for uplink transmission and/or downlink transmission, one or more frequency domain resources used for uplink transmission and/or downlink transmission according to the location information notified in the DCI.

The semi-static-based dynamic manner:

The base station sends the determined frequency domain resources used for uplink and downlink transmission at the same time unit to the terminal through the RRC signaling, and the frequency domain resources include a plurality of frequency domain resources used for uplink transmission and/or downlink transmission. Then the base station determines, from the plurality of frequency domain resources used for uplink transmission and/or downlink transmission, one or more frequency domain resources used for uplink transmission and/or downlink transmission used by the terminal, and sends the location information of the one or more frequency domain resources used for uplink transmission and/or downlink transmission to the terminal through the DCI.

After receiving the above DCI, the terminal determines the frequency domain resources used for uplink and downlink transmission at the same time unit according to the RRC signaling above. Moreover, the terminal determines, from the plurality of frequency domain resources used for uplink transmission and/or downlink transmission, one or more frequency domain resources used for uplink transmission and/or downlink transmission according to the location information notified in the DCI.

The specific embodiments may refer to the description of the corresponding embodiments on the terminal side, and will not be repeated here.

In the embodiment provided by the present disclosure, sending the one or more frequency domain resources used for uplink transmission and/or downlink transmission to the terminal through the downlink control information (DCI) may be implemented in the following manner:

sending the one or more frequency domain resources used for uplink transmission and/or downlink transmission to the terminal through frequency domain resource allocation information of the DCI. The above frequency domain resource allocation information includes a frequency domain resource allocation field, a sub-band indication field, or sub-band allocation field indication.

Optionally, there is an association relationship between the uplink frequency domain resources and the downlink frequency domain resources in the plurality of uplink and downlink frequency domain resources, and the association relationship may be a relationship in which the uplink frequency domain resources and the downlink frequency domain resources are configured in pairs. The specific embodiments may refer to the description in the terminal side, and will not be repeated here.

Optionally, the DCI is DCI used for scheduling a PDSCH or a PUSCH, or DCI used for configuring the uplink and/or downlink frequency domain resources.

The solution introduction of the dynamic manner on the base station side may refer to the description on the terminal side, and will not be repeated here.

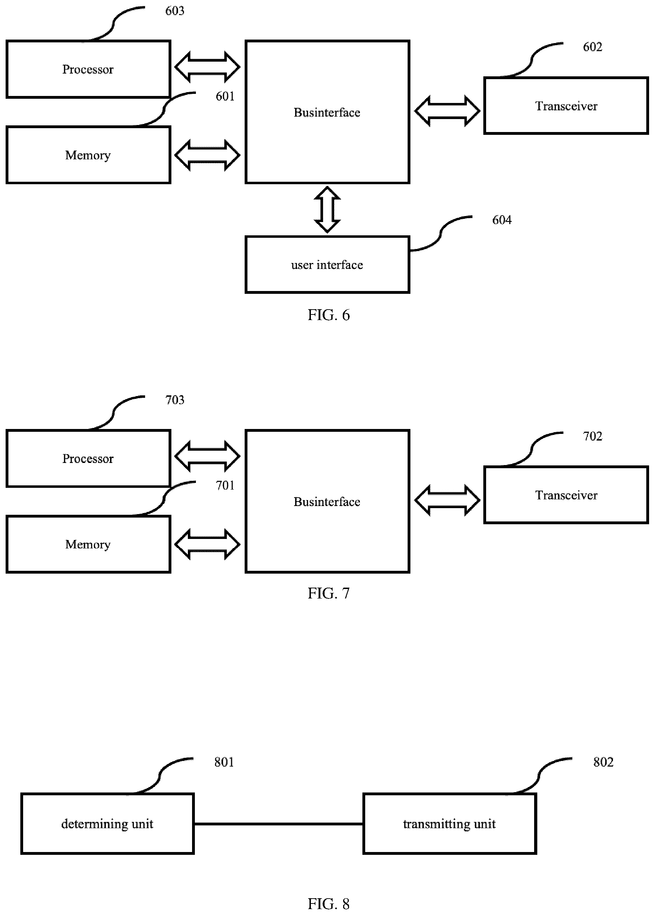

As shown in FIG. 6, an embodiment of the present disclosure provides a terminal, including a memory 601, a transceiver 602 and a processor 603.

The memory 601 is configured to store a computer program; the transceiver 602 is configured to receive and send data under control of the processor 603; and the processor 603 is configured to read the computer program in the memory 601 and execute the following operations:

determining frequency domain resources used for uplink and downlink transmission at the same time unit in the same frequency spectrum resource; and

performing data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the processor 603 is further configured to:

acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the processor 603 is further configured to:

receive radio resource control (RRC) signaling, the RRC signaling being used for configuring the frequency domain resources used for uplink and downlink transmission at the same time unit in the frequency spectrum resource; and

determine the frequency domain resources used for uplink and downlink transmission at the same time unit according to the RRC signaling.

In a possible implementation, the RRC signaling is used for configuring frequency domain resources corresponding to a cell level or a terminal group level or a terminal level.

In a possible implementation, the frequency domain resources include:

the plurality of frequency domain resources used for uplink transmission and/or downlink transmission.

In a possible implementation, the processor 603 is further configured to:

receive downlink control information (DCI), the DCI being used for notifying the terminal to use one or more frequency domain resources used for uplink transmission and/or downlink transmission in the plurality of frequency domain resources used for uplink transmission and/or downlink transmission; and

determine the one or more frequency domain resources used for uplink transmission and/or downlink transmission according to the DCI.

In a possible implementation, the processor 603 is further configured to:
determine the one or more frequency domain resources used for uplink transmission and/or downlink transmission through frequency domain resource allocation information of the DCI.

In a possible implementation, there is an association relationship between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

The transceiver 602 is configured to receive and send data under control of the processor 603.

In FIG. 6, a bus architecture may include any number of interconnected buses and bridges, which are specifically linked together by various circuits of one or more processors represented by the processor 603 and a memory represented by the memory 601. The bus architecture may further link various other circuits such as a peripheral device, a voltage stabilizer and a power management circuit together, which are publicly known in the art and therefore are not further described herein. The bus interface provides an interface. The transceiver 602 may be a plurality of elements, including a transmitter and a receiver, that provide a unit for communicating with various other apparatuses over transmission mediums. These transmission mediums include wireless channels, wired channels, optical cables, and others. For different user equipment, the user interface 604 may further be an interface capable of being externally connected and internally connected with a required device, and the connected device includes, but is not limited to a keypad, a display, a speaker, a microphone, a joystick, and the like.

The processor 603 is responsible for managing the bus architecture and usual processing, and the memory 601 may store data used by the processor 600 during operation execution.

Optionally, the processor 603 may be a central processing unit (CPU), an application specific integrated circuit (ASIC), a field-programmable gate array (FPGA), or a complex programmable logic device (CPLD), and the processor may also use a multi-core architecture.

The processor, by calling the computer program stored in the memory, is configured to execute any method provided by the embodiments of the present disclosure according to obtained executable instructions. The processor and memory may also be physically arranged separately.

As shown in FIG. 7, a base station provided by an embodiment of the present disclosure includes a memory 701, a transceiver 702 and a processor 703.

The memory 701 is configured to store a computer program; the transceiver 702 is configured to receive and send data under control of the processor 703; and the processor 703 is configured to read the computer program in the memory and execute the following operations:

determining frequency domain resources used for uplink and downlink transmission at the same time unit in the same frequency spectrum resource; and
performing data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the processor 703 is further configured to:
acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the processor 703 is further configured to:
send, after determining the frequency domain resources used for uplink and downlink transmission at the same time unit in the same frequency spectrum resource, the frequency domain resources to a terminal through radio resource control (RRC) signaling.

In a possible implementation, the processor 703 is further configured to:

the RRC signaling being a cell level or a terminal group level or a terminal level; and
send the frequency domain resources of the cell level or the terminal group level or the terminal level to the terminal through the RRC signaling.

In a possible implementation, the frequency domain resources include:
a plurality of frequency domain resources used for uplink transmission and/or downlink transmission.
In a possible implementation, the processor 703 is further configured to:

determine, after determining the frequency domain resources used for uplink and downlink transmission at the same time unit in the same frequency spectrum resource, one or more frequency domain resources used for uplink transmission and/or downlink transmission used by the terminal from the plurality of frequency domain resources used for uplink transmission and/or downlink transmission; and

send the one or more frequency domain resources used for uplink transmission and/or downlink transmission to the terminal through downlink control information (DCI).

In a possible implementation, the processor 703 is further configured to:
send information of the one or more frequency domain resources used for uplink transmission and/or downlink transmission to the terminal through frequency domain resource allocation information of the DCI.
In a possible implementation, there is an association relationship between uplink frequency domain resources and downlink frequency domain resources among the plurality of uplink and downlink frequency domain resources.
In a possible implementation, the DCI is DCI used for scheduling a PDSCH or a PUSCH, or DCI used for configuring the uplink and/or downlink frequency domain resources.
In a possible implementation, a part of resources is reserved on two sides of the frequency spectrum resource.
In a possible implementation, granularity of the frequency domain resources used for uplink/downlink transmission takes six resource blocks (RBs) as a unit.
In a possible implementation, a starting resource block (RB) index of the frequency domain resources used for uplink and/or downlink transmission is an integer multiples of 6.
In a possible implementation, a width of the frequency spectrum resource is greater than or equal to 5 MHz.
In a possible implementation, the frequency domain resources used for uplink and downlink transmission at the same time unit are valid in a part of time units.
The transceiver 702 is configured to receive and send data under control of the processor 703.
In FIG. 7, a bus architecture may include any number of interconnected buses and bridges, which are specifically linked together by various circuits of one or more processors represented by the processor 703 and a memory represented by the memory 701. The bus architecture may further link various other circuits such as a peripheral device, a voltage stabilizer and a power management circuit together, which are publicly known in the art and therefore are not further described herein. The bus interface provides an interface. The transceiver 702 may be a plurality of elements, including a transmitter and a receiver, that provide a unit for communicating with various other apparatuses over transmission mediums. These transmission mediums include wireless channels, wired channels, optical cables, and others. The processor 703 is responsible for managing the bus architecture and usual processing, and the memory 701 may store data used by the processor 703 during operation execution.
The processor 703 may be a central processing unit (CPU), an application specific integrated circuit (ASIC), a field-programmable gate array (FPGA), or a complex programmable logic device (CPLD), and the processor may also use a multi-core architecture.
It should be noted here that the above apparatus provided by the embodiments of the present disclosure can implement all the method steps implemented by the above method embodiments, and can achieve the same technical effect, and the parts and beneficial effects same as the method embodiments in this embodiment will not be described in detail here.
As shown in FIG. 8, a terminal provided by an embodiment of the present disclosure includes:

a determining unit 801, configured to determine frequency domain resources used for uplink and downlink transmission at the same time unit in the same frequency spectrum resource; and
a transmitting unit 802, configured to perform data transmission according to the frequency domain resources.

In a possible implementation, the frequency spectrum resource includes a TDD band, an FDD band for uplink, an FDD band for downlink, a carrier, a BWP, or a band for deploying full duplex.
In a possible implementation, the determining unit 801 is further configured to:
acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the determining unit 801 is further configured to:

receive radio resource control (RRC) signaling, the RRC signaling being used for configuring the frequency domain resources used for uplink and downlink transmission at the same time unit in the frequency spectrum resource; and determine the frequency domain resources used for uplink and downlink transmission at the same time unit according to the RRC signaling.

In a possible implementation, the RRC signaling is used for configuring frequency domain resources corresponding to a cell level or a terminal group level or a terminal level.

In a possible implementation, the frequency domain resources include:

a plurality of frequency domain resources used for uplink transmission and/or downlink transmission.

In a possible implementation, the determining unit 801 is further configured to:

receive downlink control information (DCI), the DCI being used for notifying the terminal to use one or more frequency domain resources used for uplink transmission and/or downlink transmission in the plurality of frequency domain resources used for uplink transmission and/or downlink transmission; and

determine the one or more frequency domain resources used for uplink transmission and/or downlink transmission according to the DCI.

In a possible implementation, the determining unit 801 is further configured to:

determine the one or more frequency domain resources used for uplink transmission and/or downlink transmission through frequency domain resource allocation information of the DCI.

In a possible implementation, there is an association relationship between uplink frequency domain resources and downlink frequency domain resources among the plurality of uplink and downlink frequency domain resources.

In a possible implementation, the DCI is DCI used for scheduling a PDSCH or a PUSCH, or DCI used for configuring the uplink and/or downlink frequency domain resources.

In a possible implementation, a part of resources is reserved on two sides of the frequency spectrum resource.

In a possible implementation, granularity of the frequency domain resources used for uplink/downlink transmission takes six resource blocks (RBs) as a unit.

In a possible implementation, a starting resource block (RB) index of the frequency domain resources used for uplink and/or downlink transmission is an integer multiples of 6.

In a possible implementation, a width of the frequency spectrum resource is greater than or equal to 5 MHz.

In a possible implementation, the frequency domain resources used for uplink and downlink transmission at the same time unit are valid in a part of time units.

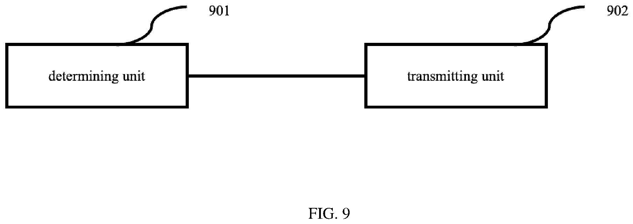

As shown in FIG. 9, a base station provided by an embodiment of the present disclosure includes:

a determining unit 901, configured to determine frequency domain resources used for uplink and downlink transmission at the same time unit in the same frequency spectrum resource; and

a transmitting unit 902, configured to perform data transmission according to the frequency domain resources.

In a possible implementation, the frequency spectrum resource includes a TDD band, an FDD band for uplink, an FDD band for downlink, a carrier, a BWP, or a band for deploying full duplex.

In a possible implementation, the determining unit 901 is further configured to:

acquire the frequency domain resources used for uplink and downlink transmission at the same time unit according to a preset uplink and downlink resource division manner, wherein the frequency domain resources are obtained by dividing the frequency spectrum resource according to the preset uplink and downlink resource division manner.

In a possible implementation, the determining unit 901 is further configured to:

send, after determining the frequency domain resources used for uplink and downlink transmission at the same time unit in the same frequency spectrum resource, the frequency domain resources to a terminal through radio resource control (RRC) signaling.

In a possible implementation, the determining unit 901 is further configured to:

the RRC signaling being a cell level or a terminal group level or a terminal level; and

send the frequency domain resources of the cell level or the terminal group level or the terminal level to the terminal through the RRC signaling.

In a possible implementation, the frequency domain resources include:
a plurality of frequency domain resources used for uplink transmission and/or downlink transmission.
In a possible implementation, the determining unit 901 is further configured to:

determine, after determining the frequency domain resources used for uplink and downlink transmission at the same time unit in the same frequency spectrum resource, one or more frequency domain resources used for uplink transmission and/or downlink transmission used by the terminal from the plurality of frequency domain resources used for uplink transmission and/or downlink transmission; and

send the one or more frequency domain resources used for uplink transmission and/or downlink transmission to the terminal through downlink control information (DCI).

In a possible implementation, the determining unit 901 is further configured to:
send information of the one or more frequency domain resources used for uplink transmission and/or downlink transmission to the terminal through frequency domain resource allocation information of the DCI.
In a possible implementation, there is an association relationship between uplink frequency domain resources and downlink frequency domain resources among the plurality of uplink and downlink frequency domain resources.
In a possible implementation, the DCI is DCI used for scheduling a PDSCH or a PUSCH, or DCI used for configuring the uplink and/or downlink frequency domain resources.
In a possible implementation, a part of resources is reserved on two sides of the frequency spectrum resource.
In a possible implementation, granularity of the frequency domain resources used for uplink/downlink transmission takes six resource blocks (RBs) as a unit.
In a possible implementation, a starting resource block (RB) index of the frequency domain resources used for uplink and/or downlink transmission is an integer multiples of 6.
In a possible implementation, a width of the frequency spectrum resource is greater than or equal to 5 MHz.
In a possible implementation, the frequency domain resources used for uplink and downlink transmission at the same time unit are valid in a part of time units.
Based on the same concept, an embodiment of the present disclosure further provides a computer readable storage medium, the computer readable storage medium stores a computer program, and the computer program is used for causing a processor to execute the method for data transmission as described above.
The computer readable storage medium may be any available medium or data storage device that can be accessed by the processor, including but not limited to, a magnetic memory ( such as a floppy disk, a hard disk, a magnetic tape, and a magneto-optical disk (MO)), an optical memory (such as a CD, a DVD, a BD, and an HVD), and a semiconductor memory (such as an ROM, an EPROM, an EEPROM, a non-volatile memory (NAND FLASH), and a solid state disk (SSD)).
Those skilled in the art should understand that the embodiments of the present disclosure may be provided as methods, systems or computer program products. Therefore, the present disclosure can adopt forms of full hardware embodiments, full software embodiments, or embodiments combining software and hardware aspects. Moreover, the present disclosure can adopt a form of the computer program products implemented on one or more computer available storage mediums (including but not limited to a disk memory, an optical memory and the like) containing computer available program codes.
The present disclosure is described with reference to flow diagrams and/or block diagrams of the methods, the devices (systems), and computer program products according to the embodiments of the present disclosure. It should be understood that each flow and/or block in the flow diagrams and/or the block diagrams and combinations of the flows and/or the blocks in the flow diagrams and/or the block diagrams can be implemented by computer executable instructions. These computer executable instructions may be provided to a processor of a general-purpose computer, a special-purpose computer, an embedded processing machine or other programmable data processing devices to generate a machine, such that the instructions, when executed by the processor of the computer or other programmable data processing devices, generate an apparatus for implementing functions specified in one or more flows in the flow diagrams and/or one or more blocks in the block diagrams.
These processor executable instructions may also be stored in a processor readable memory which can guide the computer or other programmable data processing devices to work in a specific manner, thus the instructions stored in the processor readable memory generates an article of manufacture that includes a command apparatus, and the command apparatus implements the functions specified in one or more flows in the flow diagrams and/or one or more blocks in the block diagrams.
These processor executable instructions may also be loaded to the computer or other programmable data processing devices, so that a series of operating steps are executed on the computer or other programmable devices to generate computer-implemented processing, such that the instructions executed on the computer or other programmable devices provide steps for implementing the functions specified in one or more flows in the flow diagrams and/or one or more blocks in the block diagrams.

Obviously, those skilled in the art can make various modifications and variations to the present disclosure without departing from the spirit and scope of the present disclosure. In this way, if these modifications and variations of the present disclosure fall within the scope of the claims of the present disclosure and their equivalent art, the present disclosure also intends to include these modifications and variations.

**Claims**

1.  A data transmission method, performed by a terminal, and comprising:

    determining frequency domain resources used for uplink and downlink transmission at the same time unit in the same frequency spectrum resource; and
    performing data transmission according to the frequency domain resources.

2.  The method according to claim 1, wherein the frequency spectrum resource comprises a time division duplex (TDD) band, an frequency division duplex (FDD) band for uplink, an FDD band for downlink, a carrier, a Band Width Part (BWP), or a band for deploying full duplex.

3.  The method according to claim 1, wherein determining the frequency domain resources used for uplink and downlink transmission at the same time unit in the same frequency spectrum resource comprises:
    acquiring the frequency domain resources used for uplink and downlink transmission at the same time unit according to a preset uplink and downlink resource division manner, wherein the frequency domain resources are obtained by dividing the frequency spectrum resource according to a pre-specified division manner.

4.  The method according to claim 1, wherein determining the frequency domain resources used for uplink and downlink transmission at the same time unit in the same frequency spectrum resource comprises:

    receiving radio resource control (RRC) signaling, the RRC signaling being used for configuring the frequency domain resources used for uplink and downlink transmission at the same time unit in the frequency spectrum resource; and
    determining the frequency domain resources used for uplink and downlink transmission at the same time unit according to the RRC signaling.

5.  The method according to claim 4, wherein the RRC signaling is used for configuring frequency domain resources corresponding to a cell level or a terminal group level or a terminal level.

6.  The method according to claim 3 or 4, wherein the frequency domain resources comprise a plurality of frequency domain resources used for uplink transmission and/or downlink transmission.

7.  The method according to claim 6, wherein determining the frequency domain resources used for uplink and downlink transmission at the same time unit in the same frequency spectrum resource comprises:

    receiving downlink control information (DCI), the DCI being used for notifying the terminal to use one or more frequency domain resources used for uplink transmission and/or downlink transmission in the plurality of frequency domain resources used for uplink transmission and/or downlink transmission; and
    determining the one or more frequency domain resources used for uplink transmission and/or downlink transmission according to the DCI.

8.  The method according to claim 7, wherein determining the one or more frequency domain resources used for uplink transmission and/or downlink transmission according to the DCI comprises:
    determining the one or more frequency domain resources used for uplink transmission and/or downlink transmission through frequency domain resource allocation information of the DCI.

9.  The method according to claim 6, wherein there is an association relationship between uplink frequency domain resources and downlink frequency domain resources among the plurality of uplink and downlink frequency domain resources.

10. The method according to claim 7, wherein the DCI is DCI used for scheduling a PDSCH or a PUSCH, or DCI used for configuring the uplink frequency domain resources and/or downlink frequency domain resources.

11. The method according to any one of claims 2 to 5, wherein a part of resources is reserved on two sides of the frequency spectrum resource.

12. The method according to claim 1, wherein granularity of the frequency domain resources used for uplink/downlink transmission takes six resource blocks (RBs) as a unit.

13. The method according to any one of claim 1 and claims 6 to 10, wherein a starting resource block (RB) index of the frequency domain resources used for uplink and/or downlink transmission is an integer multiple of 6.

14. The method according to claim 1 or 2, wherein a width of the frequency spectrum resource is greater than or equal to 5 MHz.

15. The method according to claim 1, wherein the frequency domain resources used for uplink and downlink transmission at the same time unit are valid in a part of time units.

16. A data transmission method, performed by a base station, and comprising:

   determining frequency domain resources used for uplink and downlink transmission at the same time unit in the same frequency spectrum resource; and
   performing data transmission according to the frequency domain resources.

17. The method according to claim 16, wherein the frequency spectrum resource comprises a time division duplex (TDD) band, an frequency division duplex (FDD) band for uplink, an FDD band for downlink, a carrier, a Band Width Part (BWP), or a band for deploying full duplex.

18. The method according to claim 16, wherein determining the frequency domain resources used for uplink and downlink transmission at the same time unit in the same frequency spectrum resource comprises:
   acquiring the frequency domain resources used for uplink and downlink transmission at the same time unit according to a preset uplink and downlink resource division manner, wherein the frequency domain resources are obtained by dividing the frequency spectrum resource according to a pre-specified division manner.

19. The method according to claim 16, wherein after determining the frequency domain resources used for uplink and downlink transmission at the same time unit in the same frequency spectrum resource, the method further comprises:
   sending the frequency domain resources to a terminal through radio resource control (RRC) signaling.

20. The method according to claim 19, wherein sending the frequency domain resources to the terminal through the radio resource control (RRC) signaling comprises:

   the RRC signaling is a cell level or a terminal group level or a terminal level; and
   sending the frequency domain resources of the cell level or the terminal group level or the terminal level to the terminal through the RRC signaling.

21. The method according to claim 18 or 19, wherein the frequency domain resources comprise:
   a plurality of frequency domain resources used for uplink transmission and/or downlink transmission.

22. The method according to claim 21, wherein after determining the frequency domain resources used for uplink and downlink transmission at the same time unit in the same frequency spectrum resource, the method further comprises:

   determining, from the plurality of frequency domain resources used for uplink transmission and/or downlink transmission, one or more frequency domain resources used for uplink transmission and/or downlink transmission used by the terminal; and
   sending the one or more frequency domain resources used for uplink transmission and/or downlink transmission to the terminal through downlink control information (DCI).

23. The method according to claim 22, wherein sending the one or more frequency domain resources used for uplink transmission and/or downlink transmission to the terminal through the downlink control information (DCI) comprises: sending the one or more frequency domain resources used for uplink transmission and/or downlink transmission to the terminal through frequency domain resource allocation information of the DCI.

24. The method according to claim 21, wherein there is an association relationship between uplink frequency domain resources and downlink frequency domain resources among the plurality of uplink and downlink frequency domain resources.

25. The method according to claim 22, wherein the DCI is DCI used for scheduling a PDSCH or a PUSCH, or DCI used for configuring the uplink and/or downlink frequency domain resources.

26. The method according to any one of claims 16 to 20, wherein a part of resources is reserved on two sides of the frequency spectrum resource.

27. The method according to claim 16, wherein granularity of the frequency domain resources used for uplink/downlink transmission takes six resource blocks (RBs) as a unit.

28. The method according to any one of claim 16 and claims 21 to 25, wherein a starting resource block (RB) index of the frequency domain resources used for uplink and/or downlink transmission is an integer multiples of 6.

29. The method according to claim 16 or 17, wherein a width of the frequency spectrum resource is greater than or equal to 5 MHz.

30. The method according to claim 16, wherein the frequency domain resources used for uplink and downlink transmission at the same time unit are valid in a part of time units.

31. A terminal for determining frequency domain resources, comprising a memory, a transceiver and a processor; the memory being configured to store a computer program; the transceiver being configured to receive and send data under control of the processor; and the processor being configured to read the computer program in the memory and execute the following operations:

   determining frequency domain resources used for uplink and downlink transmission at the same time unit in the same frequency spectrum resource; and
   performing data transmission according to the frequency domain resources.

32. The terminal according to claim 31, wherein the frequency spectrum resource comprises a time division duplex (TDD) band, an frequency division duplex (FDD) band for uplink, an FDD band for downlink, a carrier, a Band Width Part (BWP), or a band for deploying full duplex.

33. The terminal according to claim 31, wherein the processor is configured to:
   acquire the frequency domain resources used for uplink and downlink transmission at the same time unit according to a preset uplink and downlink resource division manner, wherein the frequency domain resources are obtained by dividing the frequency spectrum resource according to a pre-specified division manner.

34. The terminal according to claim 31, wherein the processor is further configured to:

   receive radio resource control (RRC) signaling, the RRC signaling being used for configuring the frequency domain resources used for uplink and downlink transmission at the same time unit in the frequency spectrum resource; and
   determine the frequency domain resources used for uplink and downlink transmission at the same time unit according to the RRC signaling.

35. The terminal according to claim 34, wherein the RRC signaling is used for configuring frequency domain resources corresponding to a cell level or a terminal group level or a terminal level.

36. The terminal according to claim 33 or 34, wherein the frequency domain resources comprise:
   a plurality of frequency domain resources used for uplink transmission and/or downlink transmission.

**37.** The terminal according to claim 36, wherein the processor is further configured to:

receive downlink control information (DCI), the DCI being used for notifying the terminal to use one or more frequency domain resources used for uplink transmission and/or downlink transmission in the plurality of frequency domain resources used for uplink transmission and/or downlink transmission; and
determine the one or more frequency domain resources used for uplink transmission and/or downlink transmission according to the DCI.

**38.** The terminal according to claim 37, wherein the processor is further configured to:
determine the one or more frequency domain resources used for uplink transmission and/or downlink transmission through frequency domain resource allocation information of the DCI.

**39.** The terminal according to claim 36, wherein there is an association relationship between uplink frequency domain resources and downlink frequency domain resources among the plurality of uplink and downlink frequency domain resources.

**40.** The terminal according to claim 37, wherein the DCI is DCI used for scheduling a PDSCH or a PUSCH, or DCI used for configuring the uplink and/or downlink frequency domain resources.

**41.** The terminal according to any one of claims 32 to 35, wherein a part of resources is reserved on two sides of the frequency spectrum resource.

**42.** The terminal according to claim 31, wherein granularity of the frequency domain resources used for uplink/downlink transmission takes six resource blocks (RBs) as a unit.

**43.** The terminal according to any one of claim 31 and claims 36 to 40, wherein a starting resource block (RB) index of the frequency domain resources used for uplink and/or downlink transmission is an integer multiples of 6.

**44.** The terminal according to claim 31 or 32, wherein a width of the frequency spectrum resource is greater than or equal to 5 MHz.

**45.** The terminal according to claim 31, wherein the frequency domain resources used for uplink and downlink transmission at the same time unit are valid in a part of time units.

**46.** A base station, comprising a memory, a transceiver and a processor;
the memory being configured to store a computer program; the transceiver being configured to receive and send data under control of the processor; and the processor being configured to read the computer program in the memory and execute the following operations:

determining frequency domain resources used for uplink and downlink transmission at the same time unit in the same frequency spectrum resource; and
performing data transmission according to the frequency domain resources.

**47.** The base station according to claim 46, wherein the frequency spectrum resource comprises a time division duplex (TDD) band, an frequency division duplex (FDD) band for uplink, an FDD band for downlink, a carrier, a Band Width Part (BWP), or a band for deploying full duplex.

**48.** The base station according to claim 46, wherein the processor is further configured to:
acquire the frequency domain resources used for uplink and downlink transmission at the same time unit according to a preset uplink and downlink resource division manner, wherein the frequency domain resources are obtained by dividing the frequency spectrum resource according to a pre-specified division manner.

**49.** The base station according to claim 46, wherein the processor is further configured to:
send, after determining the frequency domain resources used for uplink and downlink transmission at the same time unit in the same frequency spectrum resource, the frequency domain resources to a terminal through radio resource control (RRC) signaling.

**50.** The base station according to claim 49, wherein the processor is further configured to:

send the frequency domain resources of the cell level or the terminal group level or the terminal level to the terminal through RRC signaling, the RRC signaling being a cell level or a terminal group level or a terminal level.

51. The base station according to claim 48 or 49, wherein the frequency domain resources comprise a plurality of frequency domain resources used for uplink transmission and/or downlink transmission.

52. The base station according to claim 51, wherein the processor is further configured to:

determine, after determining the frequency domain resources used for uplink and downlink transmission at the same time unit in the same frequency spectrum resource, one or more frequency domain resources used for uplink transmission and/or downlink transmission used by the terminal from the plurality of frequency domain resources used for uplink transmission and/or downlink transmission; and
send the one or more frequency domain resources used for uplink transmission and/or downlink transmission to the terminal through downlink control information (DCI).

53. The base station according to claim 50, wherein the processor is further configured to:
send information of the one or more frequency domain resources used for uplink transmission and/or downlink transmission to the terminal through frequency domain resource allocation information of the DCI.

54. The base station according to claim 51, wherein there is an association relationship between uplink frequency domain resources and downlink frequency domain resources among the plurality of uplink and downlink frequency domain resources.

55. The base station according to claim 52, wherein the DCI is DCI used for scheduling a PDSCH or a PUSCH, or DCI used for configuring the uplink and/or downlink frequency domain resources.

56. The base station according to any one of claims 47 to 50, wherein a part of resources is reserved on two sides of the frequency spectrum resource.

57. The base station according to claim 46, wherein granularity of the frequency domain resources used for uplink/-downlink transmission takes six resource blocks (RBs) as a unit.

58. The base station according to any one of claim 46 and claims 51 to 55, wherein a starting resource block (RB) index of the frequency domain resources used for uplink and/or downlink transmission is an integer multiples of 6.

59. The base station according to claim 46 or 47, wherein a width of the frequency spectrum resource is greater than or equal to 5 MHz.

60. The base station according to claim 46, wherein the frequency domain resources used for uplink and downlink transmission at the same time unit are valid in a part of time units.

61. A terminal or a base station, comprising:

a determining unit, configured to determine frequency domain resources used for uplink and downlink transmission at the same time unit in the same frequency spectrum resource; and
a transmitting unit, configured to perform data transmission according to the frequency domain resources.

62. A processor readable storage medium, wherein the processor readable storage medium stores a computer program, and the computer program is used for causing a processor to execute the method according to any one of claims 1 to 30.

| determine frequency domain resources for uplink and downlink transmission at the same moment in the same frequency spectrum resource | 101 |

| perform data transmission according to the frequency domain resources | 102 |

FIG. 1

24$^{th}$ RB

⋮             ⋮

15$^{th}$ RB

14$^{th}$ RB

13$^{th}$ RB

12$^{th}$ RB

11$^{th}$ RB

10$^{th}$ RB

9$^{th}$ RB

⋮             ⋮

0$^{th}$ RB

FIG. 2

51th RB

$\vdots$           $\vdots$

30th RB

29th RB

28th RB

27th RB

26th RB

25th RB

24th RB

23th RB

22th RB

21th RB

$\vdots$           $\vdots$

0th RB

FIG. 3

24<sup>th</sup> RB

22<sup>th</sup> RB

UL-SB1

17<sup>th</sup> RB

16<sup>th</sup> RB

DL-SB1

12<sup>th</sup> RB

11<sup>th</sup> RB

UL-SB0

8<sup>th</sup> RB

7<sup>th</sup> RB

DL-SB0

2<sup>th</sup> RB

0<sup>th</sup> RB

FIG. 4

FIG. 5

603

Processor

601

Memory

Businterface

602

Transceiver

604

user interface

FIG. 6

703

Processor

701

Memory

Businterface

702

Transceiver

FIG. 7

801

determining unit

802

transmitting unit

FIG. 8

determining unit — 901

transmitting unit — 902

FIG. 9

## INTERNATIONAL SEARCH REPORT

| International application No. |
|---|
| **PCT/CN2022/133310** |

**A.    CLASSIFICATION OF SUBJECT MATTER**

H04W72/04(2023.01)i

According to International Patent Classification (IPC) or to both national classification and IPC

**B.    FIELDS SEARCHED**

Minimum documentation searched (classification system followed by classification symbols)

H04W; H04Q7/-; H04M; H04L; H04B

Documentation searched other than minimum documentation to the extent that such documents are included in the fields searched

Electronic data base consulted during the international search (name of data base and, where practicable, search terms used)

CNTXT, CNABS, CNKI, WPABS, VEN, USTXT, WOTXT, EPTXT, 3GPP: 上行, 下行, 同一, 相同, 同时, 时间, 时刻, 帧, 符号, 时隙, 频域, 频谱, 频带, 子带, 载波, 带宽部分, 子带全双工, uplink, downlink, time, frame, slot, band, carrier, BWP, sub-band full duplex, subband full duplex

**C.    DOCUMENTS CONSIDERED TO BE RELEVANT**

| Category* | Citation of document, with indication, where appropriate, of the relevant passages | Relevant to claim No. |
|---|---|---|
| X | WO 2021202185 A1 (QUALCOMM INC.) 07 October 2021 (2021-10-07) description, paragraphs [0065]-[0315], and figures 1-22 | 1-62 |
| X | WO 2021230998 A1 (QUALCOMM INC.) 18 November 2021 (2021-11-18) description, paragraphs [0033]-[0188], and figures 1-11 | 1-62 |
| X | CN 113924757 A (QUALCOMM INC.) 11 January 2022 (2022-01-11) description, paragraphs [0032]-[0158], and figures 1-18 | 1-62 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 February 2023** | **10 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/133310**

| Patent document cited in search report | | | Publication date (day/month/year) | Patent family member(s) | | | Publication date (day/month/year) |
|---|---|---|---|---|---|---|---|
| WO | 2021202185 | A1 | 07 October 2021 | None | | | |
| WO | 2021230998 | A1 | 18 November 2021 | None | | | |
| CN | 113924757 | A | 11 January 2022 | US | 2020382267 | A1 | 03 December 2020 |
| | | | | WO | 2020247497 | A1 | 10 December 2020 |
| | | | | EP | 3977803 | A1 | 06 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210210964

- CN 202210400170